(19) Europäisches Patentamt

European Patent Office

Office européen des brevets

(11) Veröffentlichungsnummer: **0 302 111 B1**

(12) **EUROPÄISCHE PATENTSCHRIFT**

(45) Veröffentlichungstag der Patentschrift: **12.05.93**

(21) Anmeldenummer: **87902869.4**

(22) Anmeldetag: **16.02.87**

(86) Internationale Anmeldenummer:
**PCT/SU87/00023**

(87) Internationale Veröffentlichungsnummer:
**WO 88/06190 (25.08.88 88/19)**

(51) Int. Cl.⁵: **C21B** **13/00**, C22B 5/00

(54) **VERFAHREN UND OFEN ZUR HERSTELLUNG VON ZWISCHENPRODUKTEN AUS EISEN−KOHLENSTOFF FÜR DIE STAHLERZEUGUNG.**

(43) Veröffentlichungstag der Anmeldung:
**08.02.89 Patentblatt 89/06**

(45) Bekanntmachung des Hinweises auf die Patenterteilung:
**12.05.93 Patentblatt 93/19**

(84) Benannte Vertragsstaaten:
**AT DE FR GB SE**

(56) Entgegenhaltungen:
EP−A− 0 114 040          EP−A− 0 143 102
DE−A− 3 220 820          DE−A− 3 418 488
DE−C− 3 034 539          GB−A− 2 100 755
US−A− 2 562 813          US−A− 4 488 905
US−A− 45 433 123

STAHL UND EISEN, Band 100, Nr. 20, 06 Ok−
tober 1970, Düsseldorf (DE); "Korf entwickelt
neues Verfahren zur Roheisenerzeugung",
Seiten 1207−1208&NUM;

(73) Patentinhaber: **MOSKOVSKY INSTITUT STALI I SPLAVOV**
**Leninsky pr., 4,**
**Moscow, 117936(SU)**

(72) Erfinder: **ROMENETS, Vladimir Andreevich**
**Lomonosovsky pr., 33−2−87**
**Moscow, 117192(SU)**
Erfinder: **USACHEV, Alexandr Borisovich**
**ul. Kakhovka, 3−1−1**
**Moscow, 113461(SU)**
Erfinder: **UGAROV, Alexei Alexeevich**
**Stary Oskol, mikroraion Zhukovo, 17−22**
**Belgorodskaya obl., 309530(SU)**
Erfinder: **BYSTROV, Valentin Petrovich**
**Schelkovsky proezd, 3−3−43**
**Moscow, 105425(SU)**
Erfinder: **VALAVIN, Valery Sergeevich**
**ul. Vinokurova, 13−27**
**Moscow, 113447(SU)**

GMELIN−DURRER; Band 2a, 1968; Seite 272−281&NUM;

GMELIN−DURRER, Band 2b, 1968; Seite 114−119&NUM;

Erfinder: **GREBENNIKOV, Vasily Romanovich**
**Rublevskoe shosse, 44−1−249**
**Moscow, 121360(SU)**
Erfinder: **GLOVATSKY, Anatoly Borisovich**
**ul. Kostyakova, 6/5−81**
**Moscow, 125422(SU)**
Erfinder: **GURSKY, Gennady Leonidovich**
**ul. Kirova, 17−71**
**Moscow, 101000(SU)**
Erfinder: **RYZHONKOV, Dmitry Ivanovich**
**ul. Novatorov, 40−12−10**
**Moscow, 117421(SU)**
Erfinder: **VASKEVICH, Alexandr Davidovich**
**ul. Akademika Vargi, 2−483**
**Moscow, 117133(SU)**
Erfinder: **CHIZHIKOVA, Valentina Maximovna**
**ul. Profsojuznaya, 36−1−39**
**Moscow, 117335(SU)**
Erfinder: **YATSENKO−ZHUK, Alexandr Dmi-**
**trievich**
**Lomonosovsky pr., 14−317**
**Moscow, 117296(SU)**
Erfinder: **GUGLYA, Vladimir Grigorievich**
**ul. Butlerova, 24−55**
**Moscow, 117485(SU)**
Erfinder: **POZHIVANOV, Alexandr Mikhailovich**
**ul. Semashko, 7/2−9**
**Lipetsk, 398002(SU)**
Erfinder: **VANJUKOV, Andrei Vladimirovich**

**deceased(SU)**

(74) Vertreter: **Finck, Dieter et al**
**Patentanwälte v. Füner, Ebbinghaus, Finck**
**Mariahilfplatz 2 & 3**
**W−8000 München 90 (DE)**

## Beschreibung

Die Erfindung betrifft ein Verfahren zur Herstellung eines eisen- und kohlenstoffhaltigen Zwischenproduktes für die Stahlerzeugung, bei dem ein eisenhaltiges Gut und ein fester kohlenstoffhaltiger Brennstoff gleichzeitig aufgegeben werden und ein sauerstoffhaltiges Gas zugeführt wird, bei dem das eisenhaltige Gut, der feste kohlenstoffhaltige Brennstoff und das sauerstoffhaltige Gas so zusammenwirken, daß der Sauerstoff des sauerstoffhaltigen Gases einen Teil des Brennstoffs unter Freiwerden von Wärme oxydiert, die zum Schmelzen des eisenhaltigen Guts und zur Reduktion von im eisenhaltigen Gut enthaltenen Metalloxyden mit Kohlenstoff des restlichen Teils des Brennstoffs genutzt wird, wobei sich Schlacke, das eisen- und kohlenstoffhaltige Zwischenprodukt und Prozeßgase bilden, und bei dem die Schlacke, das eisen- und kohlenstoffhaltige Zwischenprodukt und die Prozeßgase abgeführt werden.

Die Erfindung betrifft außerdem einen Ofen zur Durchführung dieses Verfahrens mit einem einen Herd aufweisenden Schmelzgefäß, einem am Schmelzgefäß abgestützten Schacht, in dessen Oberteil eine Beschickungsvorrichtung für eisenhaltiges Gut und festen kohlenstoffhaltigen Brennstoff angeordnet ist, Hauptwindformen mit Düsen zum Zuführen eines sauerstoffhaltigen Gases in das Schmelzgefäß, einem in der Wand des Schmelzgefässes in der Nähe des Herdes angeordneten Schlackenabzugskasten, einem in der Wand des Schmelzgefässes unterhalb der Anordnungsebene der Hauptwindformen verlaufenden Abzugskanal für eisen- und kohlenstoffhaltiges Zwischenprodukt, und einer im Oberteil des Schachtes angeordneten Abzugseinrichtung für Prozeßgase, wobei das Schmelzgefäß und der Schacht im horizontalen Querschnitt eine im wesentlichen rechteckige Form haben.

Ein solcher Ofen ist aus Gmelin-Durrer, Band 2a, Seiten 272 bis 281 und Band 2b, Seiten 114 bis 119 bekannt. Dieser bekannte Ofen ist ein Niederschachtofen für die Hochofenverhüttung, bei der Roheisen aus einem Eisenerzrohstoff, darunter aus einem vorher reduzierten, hergestellt werden kann sowie eisenhaltige Abfälle wie Schlämme, Schrott und Späne teilweise verarbeitet werden können. Die Hochofenverhüttung erfordert jedoch eine vorangehende Vorbereitung des Eisenerzrohstoffes, welche in dessen Stückigmachen durch Agglomerieren oder Pelletisieren besteht. Außerdem wird bei der Hochofenverhüttung als reduzierender Brennstoff hochwertiger Hüttenkoks eingesetzt, für dessen Herstellung nur teure Kokerkohlen einer sehr begrenzten Palette in Frage kommen, deren Vorräte in der Welt schnell abnehmen. Es ist also für die Hochofenverhüttung erforderlich, daß außer dem eigentlichen Hochofenbetrieb eine Kokerei sowie eine Agglomerier- oder Pelletisierfabrik zur Verfügung stehen.

Darüber hinaus wird für eine wirkungsvolle Hochofenverhüttung Rohstoff mit einem hohen Eisengehalt benötigt, d.h. ein solcher, der normalerweise vorläufig aufbereitet worden ist. Der Einsatz von armen Erzen, die nur schwer aufbereitet werden können, ist unwirtschaftlich.

Eine weitere notwendige Bedingung für eine wirkungsvolle Hochofenverhüttung ist ein hinreichend großes Produktionsvolumen. Bei einer Produktion mit geringer Leistung ist die Hochofenverhüttung uneffektiv.

Der Nachteil der Hochofenverhüttung besteht auch darin, daß die chemische Zusammensetzung des nach diesem Verfahren hergestellten Produktes, d.h. des Roheisens, sich nur in engen Grenzen variieren läßt. Dies erschwert die Technologie der Stahlerzeugung.

Außerdem können bei der Hochofenverhüttung im Bestand des Möllers Abfallprodukte in nur geringen Mengen eingesetzt werden. Beim Einsatz von Abfällen werden der Ofenbetrieb und die Prozeßkennwerte merklich schlechter. Insbesondere bei der Verarbeitung von metallurgischen Schlämmen, die man dem Möller bei der Herstellung von Agglomerat beimischt, sinkt die Leistung der Hochöfen und steigt der Koksverbrauch infolge der Bildung von Zinkgekrätz in den Öfen.

Die genannten Nachteile der Hochofenverhüttung, von denen der Einsatz von Koks ohne Zweifel der wichtigste ist, waren Grund dafür, daß im Eisenhüttenwesen sich ein neuer Fachbereich, nämlich die sogenannte koksfreie Metallurgie, durchgesetzt hat. Bis jetzt ist auf diesem Gebiet eine Reihe technologische Prozesse und Produktionsschemata entwickelt worden, die in folgende Hauptgruppen unterteilt werden können.

Zur ersten Gruppe gehören Verfahren zur Herstellung eines eisen- und kohlenstoffhaltigen Zwischenproduktes, die auf der Ausnutzung der Elektroenergie beruhen und in Elektroöfen durchgeführt werden. Wenn Eisenerze oder deren Konzentrate als Einsatzgut verwendet werden, sind diese Verfahren in der Regel mehrstufig. Dem Elektroschmelzen geht das Heizen und die vorläufige Festphasenreduktion des Rohstoffes voran. Bei den wirksamsten Elred- und Inred-Verfahren aus dieser Gruppe, die in den letzten Jahren in Schweden entwickelt worden sind, wird neben der Elektroenergie teilweise auch die Energie der im Sauerstoff zu verbrennenden Kohle ausgenutzt. Doch auch bei diesen Verfahren bleibt der Stromverbrauch hoch. Zum anderen benötigen sie doch eine gewisse Menge Koks. Verfahren, die auf der Elektroenergieausnutzung beruhen, können nur unter der Bedingung wirksam sein, wenn die Abgase zur Erzeugung dieser Energie verwertet werden. Doch sind auch in diesem Fall diese Verfahren wegen hoher Verluste bei der Übertragung der
Elektroenergie und den mehrfachen Transformationen weniger wirksam als die Verfahren, bei denen die Brennstoffenergie unmittelbar ausgenutzt
wird.

Zur zweiten Gruppe der Verfahren, die in den
letzten Jahren eine Verbreitung gefunden haben,
gehören Verfahren zur Herstellung eines eisen‐
und kohlenstoffhaltigen Zwischenproduktes bei
denen eine nicht kokende Kohle und gasförmiger
Sauerstoff zum Herunterschmelzen eines teilweise
reduzierten Rohstoffes in Aggregaten vom Konvertertyp verwendet werden. Dazu gehören COIN‐
, KS‐Verfahren, das Verfahren der japanischen
Firma Sumito und andere. Sie beruhen auf dem
Einblasen der staubförmigen Kohle im Sauerstoffstrom in das Metallbad. Dabei verbrennt ein Teil
der Kohle im Sauerstoff unter CO‐Bildung und
unter Freiwerden von Wärme, die zur Durchführung
des Schmelzens notwendig ist. Der andere Teil der
Kohle wird zum Aufkohlen des Metalls verbraucht.
Die Eisenoxide aus dem eingesetzten Rohstoff
gehen bei dessen Schmelzen in die Schlacke über,
aus der sie mit dem im Metall gelösten Kohlenstoff
reduziert werden.

Das sich bei diesem Verfahren entwickelte reduzierende Gas wird zur vorangehenden Reduktion
des Eisenerzrohstoffes ausgenutzt. Somit besteht
das Schema der Herstellung eines Zwischenproduktes aus dem Eisenerzrohstoff für die Stahlerzeugung aus zwei Stufen. Ein weiterer Nachteil der
Verfahren dieser Gruppe liegt in dem Einsatz der
staubförmigen Kohle, deren Aufbereitung mit großen Schwierigkeiten zusammenhängt. Außerdem
ist die pneumatische Förderung der staubförmigen
Kohle im Sauerstoffstrom mit großen Schwierigkeiten verbunden. Ein großes Problem stellt die
Sicherung der Beständigkeit des feuerfesten
Ofenfutters dar. Die Verwendung von kühlbaren
Elementen in der Ofenkonstruktion an Stelle von
Feuerfeststoffen unter Kochen des Metallschmelzbades ist wegen des Zusammenwirkens des in
diesem gelösten Kohlenstoffes mit den Eisenoxiden der Schlacke praktisch unmöglich.

Eine besondere Gruppe stellen Verfahren dar,
bei denen das aus dem Schmelzbad entweichende
reduzierende Gas, vorzugsweise CO, nicht in einem anderen Aggregat beispielsweise zur vorangehenden Reduktion des Rohstoffes, zur Verbrennung des Rohstoffes zwecks Vorwärmung,
Dampf‐ oder Elektroenergieerzeugung, sondern
unmittelbar in dem Reduktions‐Schmelzofen verwertet wird. Hierzu gehören solche Verfahren wie
das Dored‐Verfahren, Ekketorp‐Wallak‐Verfahren u.a. Sie wurden in 50er und 60er Jahren aktiv
entwickelt. Vorteile dieser Verfahren sind eine einfache Technologie und die einfache konstruktive
Ausführung der Ausrüstung sowie die Einstufigkeit
des Prozesses, die dadurch erzielt wird, daß die
Prozeßgase unmittelbar im Ofen nachgebrannt
werden. Doch ist die Ausnutzung der Nachbrennwärme nicht wirksam genug. Deswegen haben
diese Verfahren keine breite Anwendung gefunden.
Mehr als dies, wurden im Zusammenhang mit dem
Fortschritt, der bei den Verfahren mit der
Festphasenreduktion der Eisenerzrohstoffe zu verzeichnen ist, in den letzten Jahren Verfahren ohne
Nachbrennen bevorzugt entwickelt, weil das in
diesen Verfahren gewonnene Gas als Reduktionsmittel bei den Prozessen der Festphasenreduktion
des Eisenerzrohstoffes eingesetzt werden kann.

Um jedoch eine hinreichend hohe Leistungsfähigkeit der Verfahren ohne Nachbrennen sicherzustellen, kann als Möllerbestandteil zweckmäßigerweise ein zuvor reduzierter Eisenerzrohstoff
verwendet werden, der Produkt der Festphasenreduktion ist.

Ein gattungsgemäßes Verfahren ist aus der
SU‐A‐1169995 bekannt. Dieses Verfahren wird in
einem Ofen durchgeführt, der ein Schmelzgefäß
mit einem Herd, einen Schacht, der am Schmelzgefäß abgestützt und mit mindestens einer im
Schachtoberteil angeordneten Beschickungsvorrichtung für eisenhaltiges Gut und festen kohlenstoffhaltigen Brennstoff versehen ist, Windformen
mit Düsen zum Einblasen des sauerstoffhaltigen
Gases ins Schmelzgefäß, einen in der Wand des
Schmelzgefässes in der Nähe des Herdes gelegenen Schlackenabzugskanal, einen in der Wand
des Schmelzgefäßes unterhalb der Anordnungsebene der Windformen mit Düsen verlaufenden
Abzugskanal für das eisen‐ und kohlenstoffhaltige
Zwischenprodukt sowie ein im Schachtoberteil angeordnetes Mittel zum Herausführen der während
des Schmelzvorganges anfallenden Prozeßgase
enthält.

Das bekannte Verfahren wird wie folgt durchgeführt. Zu Beginn der Verhüttung wird in den
Schmelzraum des Ofens Koks, der die Rolle von
Füllkörpern spielt, aufgegeben, durch die Windformen ein sauerstoffhaltiges Gas zugeführt und
auf den Koks über eine entsprechende Vorrichtung
ein eisenhaltiges Gut geladen. Nach dem Ausbrennen von Koks (der Koksfüllung) und dem
Schmelzen des eisenhaltigen Gutes und der Reduktion von in diesem enthaltenen Metalloxiden
bildet sich ein Schlackenbad, welches aus Metall
und Schlacke besteht. Daraufhin wird über dem
Schlackenbad oberhalb dessen Spiegelhöhe das
sauerstoffhaltige Gas zugeführt, und man beginnt,
von oben mit dem Aufgeben des festen kohlenstoffhaltigen Brennstoffes (Kohle) zusammen mit
dem eisenhaltigen Gut (Eisenschwamm) anstelle
von Koks. Ein Teil des Brennstoffes (Kohle) wird im sauerstoffhaltigen Gas zu CO oxidiert, während die sich entwickelnden Gase emporsteigen und eine Wirbelschicht der Kohleteilchen über dem Schlackenbad erzeugen. Die sich entwickelnde Wärme sorgt für eine ausreichend hohe Temperatur in dieser Wirbelschicht. Durch Strahlung wird die Wärme aus der Hochtemperaturzone auf das Schlackenbad übertragen, in welches von oben das eisenhaltige Gut weiterfällt. Dieses Gut erhitzt sich teilweise während des Fallens im Ofenschacht und schmilzt dann schwimmend auf der Schlackenoberfläche oder im Schlackeninnern unter Bildung eines flüssigen Metalls, d.h. eines eisen- und kohlenstoffhaltigen Zwischenproduktes für die Stahlerzeugung, das absinkt und sich unter der Schlackenschicht auf dem Ofenherd ansammelt. Die flüssigen Schmelzprodukte, also Metall und Schlacke, werden kontinuierlich oder diskontinuierlich abgeführt. Das Verfahren sieht auch die Verwendung eines zerkleinerten Eisenerzrohstoffes ohne vorherige Reduktion und eines feinen Nichteisenerzes vor. Dem oberen Teil der Wirbelschicht der Kohle können oberhalb des Zufuhrniveaus des sauerstoffhaltigen Gases flüssige oder gasförmige Kohlenwasserstoffe zugeführt werden.

Das bekannte Verfahren und der Ofen für seine Durchführung zeichnen sich durch eine ungenügende Wirtschaftlichkeit aus, die durch eine Reihe von Ursachen bedingt ist.

Infolge dessen, daß sich die hauptsächlichen Wärme- und Stoffaustauschprozesse in der Wirbelschicht der Kohleteilchen abspielen, sind hohe Zufuhrgeschwindigkeiten von Sauerstoff und hohe Austrittsgeschwindigkeiten der sich bildenden Prozessgase erforderlich. Dies führt zum großen Austrag der Kohle und des zu verarbeitenden eisenhaltigen Gutes in Form von Staub aus dem Ofen. Die Teilchengröße des eisenhaltigen Gutes und des Brennstoffes muß in einem engen Bereich liegen, der ausgehend von der Abgasgeschwindigkeit gewählt wird. Im anderen Fall werden die Feinkörner aus dem Ofen ausgetragen, während die größeren Körner umgeschmolzen und nicht hinreichend erhitzt in die Schlackenschicht gelangen werden.

Im Zusammenhang damit, daß sich die Schlacke in einem ruhigen Zustand befindet, ist ihre wärmeaufnehmende Oberfläche durch den Flächeninhalt des Schlackenbadspiegels begrenzt, und der Wärmeaustausch in der Schlackenschicht ist wegen der niedrigen Wärmeleitfähigkeit erschwert. Die in die Schlacke gelangten Teilchen des Gutes erwärmen sich und schmelzen nur langsam, während sich auf der Schlackenoberfläche eine Schicht aus größeren Brennstoffstücken, die in der Wirbelschicht nicht gehalten werden können, bildet. Durch ihre niedrige Wärmeleitfähigkeit verhindern diese Stücke die Wärmeübertragung aus der Hochtemperaturzone auf die Schlacke, die vorweigend durch Strahlung erfolgt.

Wenn ein Eisenerzrohstoff (Erze, Konzentrat) oder Eisenschwamm, die einen nicht hinreichend hohen Reduktionsgrad aufweisen, als eisenhaltiges Gut eingesetzt wird, werden die darin enthaltenen Eisenoxide in die Schlacke übergehen. Die Reduktion von Eisen aus der Schlacke kann entweder mit Kohlenstoff aus den auf der Schlackenoberfläche schwimmenden Brennstoffstücken oder durch Berührung der Schlacke mit der reduzierenden Atmosphäre des Ofens erfolgen. Diese beiden Vorgänge verlaufen jedoch mit kleinen Geschwindigkeiten, weil die Phasenberührungsfläche durch den Flächeninhalt des Schlackenbades begrenzt ist und die Geschwindigkeit des Stofftransportes in der Schlacke wegen schlechter Durchmischung der letzteren gering ist.

Alle diese Ursachen führen zu einer niedrigen Produktivität des Prozesses und als Folge zu einem erhöhten Brennstoffverbrauch und einem nicht hinreichend hohen Ausbringen von Metall – Eisen – als Ergebnis der Metallverluste mit der Schlacke insbesondere beim ununterbrochenen Schlackenabstich. Darüber hinaus wirken das bekannte Verfahren und der Ofen für seine Durchführung sehr einschränkend sowohl auf die chemische Zusammensetzung, als auch auf die Korngrößenzusammensetzung des eisenhaltigen Gutes und des Brennstoffes.

Der Erfindung liegt die Aufgabe zugrunde ein Verfahren sowie einen Ofen zur Herstellung eines eisen- und kohlenstoffhaltigen Zwischenprodukts mit hoher Leistung zu schaffen, mit denen bei geringem Brennstoffverbrauch eine große Menge an Metall aus dem eisenhaltigen Gut ausgebracht werden kann.

Ausgehend von dem gattungsgemäßen Verfahren wird diese Aufgabe dadurch gelöst, daß vor der gleichzeitigen Aufgabe von eisenhaltigem Gut und festem kohlenstoffhaltigem Brennstoff ein Schlackenbad gemacht und das sauerstoffhaltige Gas unter Druck in das Schlackenbad unterhalb des Schlackenbadspiegels zugeführt wird, wodurch das Schlackenbad in eine aufgewirbelte obere und eine ruhigere untere Zone geteilt wird, daß in die obere Zone soviel fester kohlenstoffhaltiger Brennstoff zugeführt wird, daß eine Volumenkonzentration des Brennstoffs in der oberen Zone von 0,5 bis 50 % bezogen auf das Schlackenbad in der oberen Zone erreicht wird, und daß das eisenhaltige Gut und der feste kohlenstoffhaltige Brennstoff gleichzeitig so aufgegeben werden, daß die Volumenkonzentration des Brennstoffs aufrechterhalten wird, wodurch das eisenhaltige Gut, der feste kohlenstoffhaltige Brennstoff und das sauerstoffhaltige Gas so zusammenwirken, daß sich in der oberen Zone flüssige Schlacke und ein flüssiges Metall in Form von Tropfen bilden, wobei die flüssige Schlacke in die untere Zone absinkt und sich dort als Schicht niederläßt und die Tropfen des flüssigen Metalls die Schicht der Schlacke passieren und darunter eine Schicht aus dem eisen- und kohlenstoffhaltigen Zwischenprodukt bilden, und daß die Schlacke und das eisen- und kohlenstoffhaltige Zwischenprodukt aus den entsprechenden Schichten heraus getrennt abgeführt werden.

Das erfindungsgemäße Verfahren ermöglicht es, den Verhüttungsprozeß schnell und ohne Verwendung einer anfänglichen Koksfüllung einzuleiten. Durch die Verwirbelung der oberen Zone des Schlackenbads durch die Zufuhr des sauerstoffhaltigen Gases und durch das Aufgeben des eisenhaltigen Gutes und des festen kohlenstoffhaltigen Brennstoffs in dieser Zone wird eine große Phasengrenzfläche zwischen den Phasen fester Brennstoff – Gas – Schlackenbad erreicht und eine Beschleunigung der Wärme- und Stoffaustauschvorgänge erzielt.

Dabei wird im Schmelzbad infolge der Oxydation eines Teils des festen kohlenstoffhaltigen Brennstoffes ein Gas mit einem hohen Partialdruck von Kohlenstoffmonoxid (CO) gebildet, das an der Reduktion von Metall, insbesondere von Eisen, aus der Schlacke teilnimmt. Die Konzentration des festen kohlenstoffhaltigen Brennstoffes in der vorwirbelten Zone während der Verhüttung wird in Abhängigkeit von der Art des Brennstoffes, der Schlackeneigenschaften und anderen Kennwerten in einem Bereich von 0,5 bis 50 % aufrechterhalten, ausgehend davon, daß in der Schlacke Bedingungen für den Verlauf der Reduktionsreaktionen geschaffen werden müssen. Wenn die Brennstoffkonzentration geringer als 0,5 % ist, laufen die Reduktionsreaktionen wegen eines hohen Partialdruckes von Sauerstoff in der Gasphase und einer nicht ausreichenden Zusammenwirkungsfläche zwischen dem eisenhaltigen Gut, dem festen kohlenstoffhaltigen Brennstoff und dem sauerstoffhaltigen Gas nicht ab. Wenn die Brennstoffkonzentration größer als 50 % ist, büßt das Schlackenbad in der verwirbelten Zone das Fließvermögen ein, wodurch sich der Wärme- und Stofftransport in dieser Zone verschlechtert. Die Bildung einer ruhigen, aus einer Schlackenschicht und einer Metallschicht bestehenden Zone im unteren Bereich des Bades ermöglicht einerseits eine bessere Trennung des Metalls von der Schlacke und begünstigt andererseits eine höhere Beständigkeit des feuerfesten Futters in dieser Zone. Alles zusammengenommen gestattet es die Produktivität des Prozesses zu erhöhen, den spezifischen Verbrauch an dem festen kohlenstoffhaltigen Brennstoff demzufolge zu reduzieren und das Eisenausbringen aus dem eisenhaltigen Gut zu steigern.

Vorteilhafterweise werden pro 1 $m^2$ waagrechter Querschnittsfläche des Schlackenbads in der Zufuhrhöhe des sauerstoffhaltigen Gases 150 bis 1500 Normkubikmeter pro Stunde sauerstoffhaltigen Gases zugeführt.

Bei einem geringeren Verbrauch des sauerstoffhaltigen Gases, als 150 $nm^3/h$ je I $m^2$ waagrechte Querschnittsfläche des Schlackenbades in der Zufuhrhöhe des sauerstoffhaltigen Gases verschlechtern sich die Durchmischungsverhältnisse des Schlackenbades und verlangsamen sich die Wärme- und Stoffaustauschvorgänge, was zur Senkung der Leistungsfähigkeit und zur Reduzierung des Eisenausbringgrades führt. Verbrauchswerte über 1500 $nm^3/h$ je I $m^2$ waagrechter Querschnittsfläche des Schlackenbades in der Zufuhrhöhe des sauerstoffhaltigen Gases können zu Schmelzenauswürfen und zum Sinken des Eisenausbringgrades wegen eines großen Volumens der oxydierenden Winddüsenzonen führen. Dabei kann die Zufuhrmenge des sauerstoffhaltigen Gases erhöht werden, wenn die Reaktionsfähigkeit des festen kohlenstoffhaltigen Brennstoffs ansteigt. Und umgekehrt, beim Übergang von der Verwendung des Brennstoffes mit einer hohen Reaktionsfähigkeit zur Verwendung des Brennstofffes mit einer niedrigen Reaktionsfähigkeit kann der Verbrauch an dem sauerstoffhaltigen Gas zweckmäßigerweise vermindert werden. Andernfalls steigt der Partialdruck des Sauerstoffes in der Gasphase an, und die Eisenverluste mit der Schlacke nehmen zu.

Es ist günstig das sauerstoffhaltige Gas während der Verhüttung kontinuierlich zuzuführen, während das eisenhaltige Gut und der feste kohlenstoffhaltige Brennstoff periodisch aufgegeben werden.

Dies gestattet es, den Schwefelgehalt des gewonnenen eisen- und kohlenstoffhaltigen Zwischenproduktes dank einer periodischen Entschwefelung des Schlackenbades zu senken.

Das Schlackenbad kann durch Eingießen von bei der Eisenmetallproduktion anfallender Schlacke oder synthetischer Schlacke gemacht werden, wobei vor dem Eingießen der flüssigen Schlacke flüssiges Metall eingegossen werden kann.

Das Schlackenbad kann auch durch Aufgabe und Schmelzen mindestens eines festen oxydischen Stoffes gemacht werden, der aus einer bei der Eisenmetallproduktion anfallenden Gruppe aus Schlacken, mineralischen Rohstoffen und Metalloxyden ausgewählt wird.

Es ist zweckmäßig in die obere Zone unterhalb des Schlackenbadspiegels zusätzlich gasförmigen, flüssigen oder staubförmigen festen kohlenstoffhaltigen Brennstoff aufzugeben.

Eine solche zusätzliche Zufuhr von Brennstoff trägt dazu bei, daß Betriebsbedingungen für die Winddüsen verbessert werden, der Kohlenstoff mit dem Sauerstoff des sauerstoffhaltigen Gases schneller in Wechselwirkung tritt, wodurch sich das Volumen der Zonen mit oxydierender Atmosphäre innerhalb des Schlackenbades an der Einblasstelle des sauerstoffhaltigen Gases vermindert.

Vorteilhafterweise erfolgt die Abführung der Schlacke aus der unteren Zone auf Höhe des mittleren oder oberen Bereichs der Schicht.

Dies ermöglicht es, daß sich über dem Metallbadspiegel im Ofen eine sehr schwach durchgemischte Schlackenschicht befindet. Kurzzeitige Schwankungen in dem Eisenoxidgehalt der Schlacke aus der oberen verwirbelten Zone wegen Schwankungen in der Zusammensetzung des Möllers werden zur Änderung in der Zusammensetzung der Schlacke in dem oberen und dem mittleren Teil der Schlackenschicht führen. Die Zusammensetzung des unteren Teils der Schlackenschicht in der unteren Zone wird sich sehr langsam ändern. Dies verhindert eine jähe Überoxydation der Schlacke und ein Aufkochen des Metallbades, was wegen der sich entwickelnden Reaktion der Entkohlung eintreten und zu Prozeßstörungen und zum Auswurf der Schmelze führen kann. Dadurch erhöhen sich die Beständigkeit und die Zuverlässigkeit des Prozesses.

Bei einer bevorzugten Ausführung des Verfahrens werden während der Verhüttung pro Tonne festen kohlenstoffhaltigen Brennstoffs zusätzlich $0,01 \times 10^3$ bis $5,0 \times 10^3$ Normkubikmeter pro Stunde sauerstoffhaltigen Gases oberhalb des Schlackenbadspiegels zugeführt.

In diesem Fall werden mit Hilfe des Sauerstoffs des sauerstoffhaltigen Gases Kohlenmonoxid und Wasserstoff, welche aus dem Schmelzbad als Ergebnis einer unvollständigen Verbrennung des Brennstoffes und der Reduktion von Metalloxiden entweichen, zu $CO_2$ und $H_2O$ nachgebrannt. Dabei wird eine große Menge Wärme frei, die teilweise auf das Schmelzbad übertragen und für den Ablauf des Prozesses ausgenutzt wird. Die Zufuhr des sauerstoffhaltigen Gases in einer Menge von $5,0 \cdot 10^3$ Normkubikmeter je l t festen kohlenstoffhaltigen Brennstoffs reicht aus, um die sämtlichen aus dem Schmelzbad entweichenden Gase nachzubrennen. Die Zufuhr des sauerstoffhaltigen Gases in einer größeren als $5,0 \cdot 10^3$ Normkubikmeter je 1 t Brennstoffmenge führt zum Anstieg im Abgasgehalt an freiem Sauerstoff ($O_2$), zum Mehrverbrauch des sauerstoffhaltigen Gases und zur Verschlechterung der Wärmeverhältnisse im Ofen. Führt man weniger sauerstoffhaltiges Gas zu, findet keine Nachbrennung statt, sondern der Sauerstoff wird zur Vergasung von aus dem Schlackenbad herausfliegenden feinen Teilchen des Brennstoffs verbraucht.

Es ist günstig während des gleichzeitigen Aufgebens pro 1 m² waagrechter Querschnittsfläche des Schlackenbads in der Zufuhrhöhe des sauerstoffhaltigen Gases 0,2 bis 5,0 t/h festen kohlenstoffhaltigen Brennstoffs zuzuführen.

Die genannten Grenzwerte ergeben sich aus den ausgewählten, ausgehend von der Flüssigkeitsdynamik des Schlackenbades und den Wärmeverhältnissen des Ofenbetriebes festgelegten Intensitäten der Zuführung des sauerstoffhaltigen Gases ins Schlackenbad und oberhalb dessen Spiegels. Eine geringere Menge an festem kohlenstoffhaltigem Brennstoff als 0,2 t/h je 1 m² waagrechte Querschnittsfläche des Schlackenbades in der Zufuhrhöhe des sauerstoffhaltigen Gases reicht nicht aus, um im Schlackenbad einen niedrigen Partialdruck des Sauerstoffs zu erzeugen, und führt zum verminderten Metallausbringen aus dem eisenhaltigen Gut in das Zwischenprodukt und zu erhöhten Metallverlusten mit der Schlacke. Eine größere Menge an festem kohlenstoffhaltigem Brennstoff als 5,0 t/h je 1 m² waagrechte Querschnittsfläche des Schlackenbades in der Zufuhrhöhe des sauerstoffhaltigen Gases führt zur Übersättigung des Schlackenbades mit dem festen kohlenstoffhaltigen Brennstoff, zur Verminderung des Fließvermögens des Schlackenbades und zum Verlangsamen der Wärme- und Stoffaustauschvorgänge und als Folge zu niedrigeren Schmelz- und Reduktionsgeschwindigkeiten.

Das erfindungsgemäße Verfahren läßt sich am besten mit einem Ofen durchführen, der sich von dem eingangs erwähnten gattungsgemäßen Ofen dadurch unterscheidet, daß die Hauptwindformen mit den Düsen im oberen Bereich der Längswände und die Abzugskanäle im Bereich der Querwände des Schmelzgefässes angeordnet sind, daß das Verhältnis der waagrechten Querschnittsfläche des Schmelzgefässes in der Anordnungsebene der Hauptwindformen mit den Düsen zur Gesamtfläche der Austrittsöffnungen der Düsen 300 bis 10000 beträgt, und daß der Abstand zwischen der unteren Grenze des Abzugskanals für das Zwischenprodukt und der oberen Grenze des Schlackenabzugskanals das 0,3 bis 0,75-fache des Abstandes zwischen der unteren Grenze des Abzugskanals für das Zwischenprodukt und der Anordnungsebene der Hauptwindformen mit den Düsen beträgt.

Durch die Ausführung des Schmelzgefässes und des Schachtes mit einer im wesentlichen rechteckigen Form im horizontalen Querschnitt und durch die Anordnung der Windformen mit den Düsen zum Zuführen des sauerstoffhaltigen Gases ins Schlackenbad auf dessen gegenüberliegenden Langseiten einander entgegen werden auf diese Weise Bedingungen für eine intensive Verwirbelung des Schlackenbades in seinem gesamten Volumen geschaffen und außerdem das Fassungsvermögen des Ofens durch die Vergrößerung seiner Länge bei einer gleichbleibenden Breite vergrößert. Durch eine intensive Verwirbelung werden hohe Ablaufgeschwindigkeit der Oxydation des festen kohlenstoffhaltigen Brennstoffes, der Einschmelzung des eisenhaltigen Gutes und der Reduktion der Metalloxyde aus der Schlacke erreicht sowie optimale Prozeßparameter, usw. ein hoher Ofendurchsatz und ein niedriger Brennstoffverbrauch, erzielt.

Durch die Anordnung der Windformen mit den Düsen im oberen Teil der Schmelzgefäßwände wird im unteren Teil des Schmelzgefäßes eine Zone mit ruhiger Schmelze geschaffen.

Ein Verhältnis der waagrechten Querschnittsfläche des Schmelzgefässes in der Anordnungsebene der Wind formen mit den Düsen zu der Gesamtfläche der Düsenaustrittsöffnungen über 10000 führt zu einer geringen Intensität der Druckluftmischung bzw. zu einer Notwendigkeit, mit zu hohen Zufuhrgeschwindigkeiten und Druckwerten des sauerstoffhaltigen Gases zu fahren, wodurch der Betrieb der Windformen verschlechtert und die wärmetechnische Ausrüstung verteuert wird. Ein Verhältnis unter 300 ist wegen der Bildung eines zu großen Volumens an Oxydationszonen im Schlackenbad, durch die die Reduktionsgeschwindigkeit verringert wird und die Auswurfgefahr entsteht, sowie wegen der zwangsläufig geringen Geschwindigkeiten der Ausströmung des sauerstoffhaltigen Gases ins Schlackenbad unzweckmäßig, weil dabei die Düsen mit der Schmelze überflutet werden. Durch die Ausführung der Kanäle in den gegenüberliegenden kurzen Schmelzgefäßwänden und beim genannten Bereich des Abstandes der unteren Grenze des Abzugskanals für das metallische Zwischenprodukt und der oberen Grenze des Schlackenabzugskanals voneinander werden optimale Bedingungen für die Trennung des Metalls und der Schlacke voneinander geschaffen, Verluste des festen kohlenstoffhaltigen Brennstoffs und des Metalls mit der Schlacke vermieden und auf diese Weise das Metallausbringen erhöht sowie der Verbrauch an dem festen kohlenstoffhaltigen Brennstoff reduziert. Bei einem Abstand der unteren Grenze des Metallabzugskanals und der oberen Grenze des Schlackenabzugskanals voneinander unter 0,3 des Abstandes der unteren Grenze des Metallabzugskanals und der Anordnungsebene der Windformen mit den Düsen voneinander wird die Schlacke unmittelbar oberhalb der Metallschicht abgezogen. Das führt dazu, daß sich über dem Metall keine langsam zu erneuernde Schlackenschicht befindet, und die Stabilität des Prozesses bei Schwankungen der chemischen Zusammensetzung der Schlacke in der oberen der Druckluftmischung ausgesetzten Zone beeinträchtigt wird.

Bei einem Abstand der unteren Grenze des Metallabzugskanals und der oberen Grenze des Schlackenabzugskanals voneinander über 0,75 des Abstandes der unteren Grenze des Metallabzugskanals und der Anordnungsebene der Windformen voneinander werden Teilchen des festen kohlenstoffhaltigen Brennstoffs und Metalltropfen mit der Schlacke ausgetragen, wodurch der Verbrauch an dem festen kohlenstoffhaltigen Brennstoff vergrößert und der Ofendurchsatz verringert wird.

Durch die Gesamtheit der aufgezählten Faktoren wird eine hohe Durchsatzleistung bei absoluter Zuverlässigkeit des Ofens erreicht, die Trennung des metallischen Zwischenproduktes für die Stahlerzeugung und der Schlacke voneinander verbessert und ein hohes Ausbringen des Metalls aus dem verarbeiteten Rohgut bei einem verringerten Verbrauch an dem kohlenstoffhaltigen Brennstoff erzielt.

Um den Verbrauch an festen Brennstoffen zu reduzieren und die Standzeit des Ofens zu verlängern, sind bei einer bevorzugten Ausführungsform der Oberteil des Schmelzgefässes und wenigstens der Unterteil des Schachtes abkühlbar und die Hauptwindformen mit den Düsen im abkühlbaren Bereich des Schmelzgefässes angeordnet, weil oberhalb der Achsen der Windformen und etwas unterhalb die verwirbelte Zone entsteht, in der die aggressive Schlacke, die mit den Festteilen des Brennstoffs und des eisenhaltigen Gutes gesättigt ist, intensiv bewegt wird und die Ofenwände umspült.

Der Ofen kann einen Schlackenabsetzbehälter mit Abzugsloch aufweisen, der mit dem Schmelzgefäß über den Schlackenabzugskanal in Verbindung steht, wobei die durchschnittliche waagrechte Querschnittsfläche des Schlackenabsetzbehälters das 0,03 bis 0,3-fache der durchschnittlichen waagrechten Querschnittsfläche des Schmelzgefässes beträgt.

Durch Vorhandensein des Schlackenabsetzbehälters wird eine feinere Trennung der Schlacke und der kleinen Metalltropfen voneinander zustandegebracht. Durch einen verlängerten Fließweg der Schlacke bis zum Auslauf aus dem Ofen sowie durch geringe Aufsteiggeschwindigkeiten der Schlacke im Behälter werden günstige Bedingungen für die Koagulation und das Absetzen der Metalltropfen aus der Schlacke geschaffen. Bei einer durchschnittlichen Waagerechtschnittfläche des Schlackenabsetzbehälters unter 0,03 der durchschnittlichen Waagerechtschnittfläche des Schmelzgefässes haben die Metalltropfen eine geringere Absetzgeschwindigkeit als die Aufsteiggeschwindigkeit der Schlacke in ihrem Absetzbehälter, wodurch keine Verringerung der Metallverluste mit der abzuziehenden Schlacke erreicht wird. Bei einer durchschnittlichen Waagerechtschnittfläche des Schlackenabsetzbehälters über 0,3 der durchschnittlichen Waagerechtschnittfläche des

Schmelzgefässes wird keine weitere Verringerung der Metallverluste mit der Schlacke erreicht, jedoch wird die letztere unterkühlt und ihr Abzug erschwert oder der Brennstoffverbrauch für die Überhitzung der Schlacke im Ofen oder für ihre Beheizung im Absetzbehälter vergrößert. Es ist dabei günstig, wenn der vertikale Abstand zwischen dem Herd des Schmelzgefässes und der Unterkante des Abzugslochs des Schlackenabsetzbehälters das 1,1 bis 2,5 – fache des Abstandes zwischen dem Herd und der Anordnungsebene der Hauptwind – formen mit den Düsen beträgt.

Durch das Verhältnis dieser Abstände wird bei den sonst gleichen Bedingungen das Höhenver – hältnis der verwirbelten und der ruhigen Zone des Schlackenbades bestimmt. Bei einem Abstand des Herd es des Schmelzgefässes und der Unterkante des Lochs im Schlackenabsetzbehälter voneinan – der unter 1,1 des Abstandes zwischen dem Herd und der Anordnungsebene der Windformen mit Düsen wird die ruhige Zone und folglich die ruhige Schlackenschicht eine geringe Höhe haben. Da – durch wird die Trennung des Metalls und der Schlacke voneinander sowie die Raffination des Metalls, insbesondere vom Schwefel verschlech – tert. Um einen vorgegebenen Schwefelgehalt zu unterhalten, wird die Basizität der Schlacke durch einen größeren Flußmittelverbrauch erhöht und als Folge der Brennstoffverbrauch vergrößert und die Durchsatzleistung verringert. Bei einem Abstand zwischen dem Herd des Schmelzgefässes und der Unterkante des Lochs im Schlackenabsetzbehälter über 2,5 des Abstandes des Herdes und der An – ordnungsebene der Windformen mit Düsen von – einander nimmt die Höhe der ruhigen Schlacken – schicht zu. Jedoch wird dadurch eine weitere Ver – besserung der Metallraffination und eine Verringe – rung des Metallgehaltes in der abzuziehenden Schlacke nicht erzielt. Außerdem wird dabei ein Temperaturabfall und eine Zunahme der Wärme – verluste hervorgerufen.

Um einen zuverlässigen und kontinuierlichen Abstich des Zwischenproduktes sicherzustellen und die Höhe des Schlackenbadspiegels zu stabilisie – ren, weist der Ofen Vorteilhafterweise einen Ab – setzbehälter für das Zwischenprodukt mit einem Abstichloch auf, der über den Abzugskanal für das Zwischenprodukt mit dem Schmelzgefäß in Ver – bindung steht und durch den während des Schmelzvorgangs die Höhe des kontinuierlich ab – gezogenen Zwischenprodukts im Schmelzgefäß konstant gehalten wird.

Beim Fehlen eines derartigen Behälters kann das Produkt diskontinuierlich oder kontinuierlich über einen kalibrierten Kanal abgezogen werden, durch den das Metall mit einer konstanten Ge – schwindigkeit ausströmt. Jedoch sind in diesem Fall komplizierte Einrichtungen zum Absperren des Kanals unter Druck erforderlich. Die Unterhaltung eines konstanten Kanalquerschnitts in Richtung des Metallabzugs ist kompliziert, noch komplizierter ist die Regelung des Kanalquerschnitts zur Änderung der Geschwindigkeit des Metallabzugs bei einer Änderung des Ofendurchsatzes oder bei einer Notwendigkeit, den Metallspiegel im Schmelzgefäß zu ändern. Somit besitzt ein Ofen mit dem Metall – abstich über den kalibrierten Kanal eine ungenü – gende Zuverlässigkeit. Beim Einsatz eines Behäl – ters mit dem Metallabstichloch wird das Metall über die Lochschwelle drucklos abgegossen. Der Metallspiegel im Schmelzgefäß kann durch eine Änderung der Schwellenhöhe des Lochs zum Me – tallabstich aus dem Behälter geregelt werden. Da – durch wird eine zuverlässige Unterhaltung des Schlackenbadspiegels im Ofen, dessen flexiblere Regelung und Vermeidung von Notsituationen ge – währleistet. Im Ergebnis wird eine Stabilisierung und eine flexible Regelung des Prozesses erzielt und letzten Endes die Durchsatzleistung gesteigert.

Bei einer weiteren bevorzugten Ausführungs – form des Ofens sind zusätzliche Windformen mit Düsen im Oberteil des Schachtes in mindestens einer horizontalen Reihe angeordnet.

Eine derartige Anordnung der Windformen gestattet es, das sauerstoffhaltige Gas zum Nach – brennen der sich aus der der Druckluftmischung ausgesetzten Schmelze ausscheidenden Brenn – gase zuzuführen und die Gaswärme unmittelbar im Ofen auszunutzen. Dadurch wird der Brennstoff – verbrauch reduziert und die Durchsatzleistung er – höht. Bei der Anordnung der Windformen in mehr als einer horizontalen Reihe wird die Gleichmä – ßigkeit des Nachbrennens verbessert.

Der Abstand zwischen dem Herd und der An – ordnungsebene einer beliebigen Reihe der zu – sätzlichen Windformen beträgt dabei am besten das 1,5 bis 6,0 – fache des Abstandes zwischen dem Herd und der Anordnungsebene der Haupt – windformen.

Bei einem Abstand des Herdes des Schmelz – gefässes und der zusätzlichen Windformen zum Zuführen des sauerstoffhaltigen Gases oberhalb der oberen Zone der der Druckluftmischung aus – gesetzten Schmelze voneinander unter 1,5 des Abstandes des Herdes des Schmelzgefässes und der Anordnungsebene der Hauptwindformen von – einander wird der feste kohlenstoffhaltige Brenn – stoff im Bad durch das für das Nachbrennen zu – geführte sauerstoffhaltige Gas oxydiert. In diesem Fall kann eine Überoxydation des Schmelzbades zustande kommen. Dadurch wird der Brennstoff – verbrauch vergrößert und die Durchsatzleistung verringert. Im Falle, wenn der Abstand des Herdes des Schmelzgefässes und der zusätzlichen Wind – formen zum Zuführen des sauerstoffhaltigen Gases oberhalb der oberen Zone der der Druckluftmi –

schung ausgesetzten Schmelze voneinander über 6,0 des Abstandes des Herdes des Schmelzgefässes und der Anordnungsebene der Hauptwindformen mit Düsen zum Zuführen des sauerstoffhaltigen Gases ins Schmelzbad voneinander beträgt, wird die beim Nachbrennen der sich aus dem Bad ausscheidenden Gase entstehende Flamme zu weit von dem Schmelzbadspiegel beabstandet sein. Dadurch wird die Wärmeübertragung auf das Bad verschlechtert und die Wirksamkeit des Prozesses verringert.

Es ist aber auch zweckmäßig, daß die waagrechte Querschnittsfläche des Schachtes in der Anordnungsebene einer beliebigen Reihe der zusätzlichen Windformen das 1,05 bis 2,0-fache der waagrechten Querschnittsfläche des Schmelzgefässes in der Anordnungsebene der Hauptwindformen beträgt.

Die Wärmeübertragung aus der Nachbrennzone auf das Schlackenbad erfolgt auf zweifache Weise: durch die Strahlungseinwirkung der Flamme auf das Schlackenbad sowie durch die Konvektion, vorwiegend durch die Erwärmung der Spritzer, die aus dem Schlackenbad in die Nachbrennzone gelangen. Dabei ist die durch die Strahlung dem Schlackenbad abgegebene Wärmemenge von der Projektionsgröße der Spiegelfläche der verwirbelten Schmelze auf die horizontale Ebene abhängig. Die durch die Konvektion abgegebene Wärmemenge hängt von der Masse und der Flughöhe der Spritzer ab, die durch die spezifische (pro Flächeneinheit) Intensität des Gasaustritts durch die Oberfläche des Schlackenbades bestimmt werden. In Zusammenhang damit wird bei einer waagerechten Querschnittsfläche des Schachtes in der Anordnungsebene der zusätzlichen Windformen über 2,0 der waagerechten Querschnittsfläche des Schmelzgefässes in der Anordnungsebene der Hauptwindformen keine weitere Verbesserung der Wärmeübertragung durch die Strahlung erreicht und außerdem die Wärmeübertragung durch die Konvektion verschlechtert. Außerdem nehmen die Wärmeverluste infolge einer größeren Wandfläche zu. Im Ergebnis verringert sich die Gesamtwärmemenge, die vom Bad durch Nachbrennen aufgenommen wird. Bei einer Waagerechtschnittfläche des Schachtes in der Anordnungsebene der zusätzlichen Windformen zum Zuführen des sauerstoffhaltigen Gases oberhalb der oberen Zone des Schlackenbades unter 1,05 der Waagerechtschnittfläche des Schmelzgefässes in der Anordnungsebene der Hauptwindformen mit Düsen zum Zuführen des sauerstoffhaltigen Gases ins Schlackenbad wird die Wärmeübertragung durch die Konvektion nicht vergrößert und die Wärmeübertragung durch die Strahlung infolge einer kleinen Fläche der verwirbelten Schmelze verringert sowie ein vollständiges Nachbrennen unmittelbar über der Oberfläche der verwirbelten Schmelze beeinträchtigt. Auf diese Weise wird außerhalb des genannten Bereichs der Ofendurchsatz verringert und der spezifische Verbrauch an dem festen kohlenstoffhaltigen Brennstoff vergrößert.

Schließlich ist es auch von Vorteil, wenn wenigstens der Unterteil des Schachtes im vertikalen Querschnitt die Form eines Trapezes hat, das mit der kleineren Grundfläche gegen das Schmelzgefäß abgestützt ist.

Bei der Druckluftmischung steigt der Spiegel des Schmelzbades an und seine obere Zone, die ein Gas-Flüssigkeit-System darstellt, befindet sich im Schachtunterteil. Durch die Ausbildung dieses Schachtteils in Form eines Trapezes, das mit der kleineren Grundfläche nach unten abgewandt ist, wird die Spiegelfläche der der Druckluftmischung ausgesetzten Schmelze vergrößert. Im Ergebnis nimmt die Fläche zu, durch die die Wärme aufgenommen wird, die durch die Strahlung aus der Nachbrennzone übertragen wird. Außerdem wird der Raum vergrößert, in dem das Nachbrennen durchgeführt wird. Dadurch werden günstige Bedingungen für das Vermischen des sauerstoffhaltigen Gases und der sich aus dem Schmelzbad ausscheidenden Brenngase sowie für ein vollständigeres Nachbrennen dieser Gase unmittelbar über dem Schmelzbad geschaffen.

Nachstehend werden Ausführungsbeispiele der Erfindung anhand von Zeichnungen näher erläutert. Es zeigt:

Fig. 1    im Querschnitt einen Ofen zur Herstellung eines eisen- und kohlenstoffhaltigen Zwischenprodukts;

Fig. 2    den Schnitt II-II von Fig. 1;

Fig. 3    den Schnitt III-III von Fig. 2;

Fig. 4    im Längsschnitt einen Ofen zur Herstellung eines eisen-und kohlenstoffhaltigen Zwischenprodukts mit einem Schlackenabsetzbehälter und einem Absetzbehälter für das Zwischenprodukt;

Fig. 5    im Längsschnitt einen Ofen zur Herstellung eines eisen- und kohlenstoffhaltigen Zwischenprodukts mit zusätzlichen Windformen;

Fig. 7    den Schnitt VII-VII von Fig. 6.

Das erfindungsgemäße Verfahren zur Herstellung eines eisen- und kohlenstoffhaltigen Zwischenproduktes für die Stahlerzeugung sieht folgende Verfahrensschritte vor.

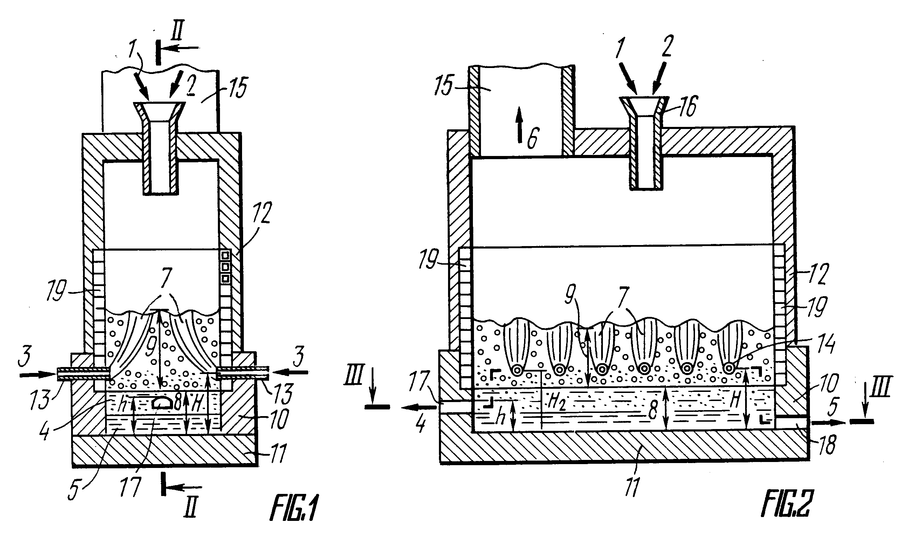

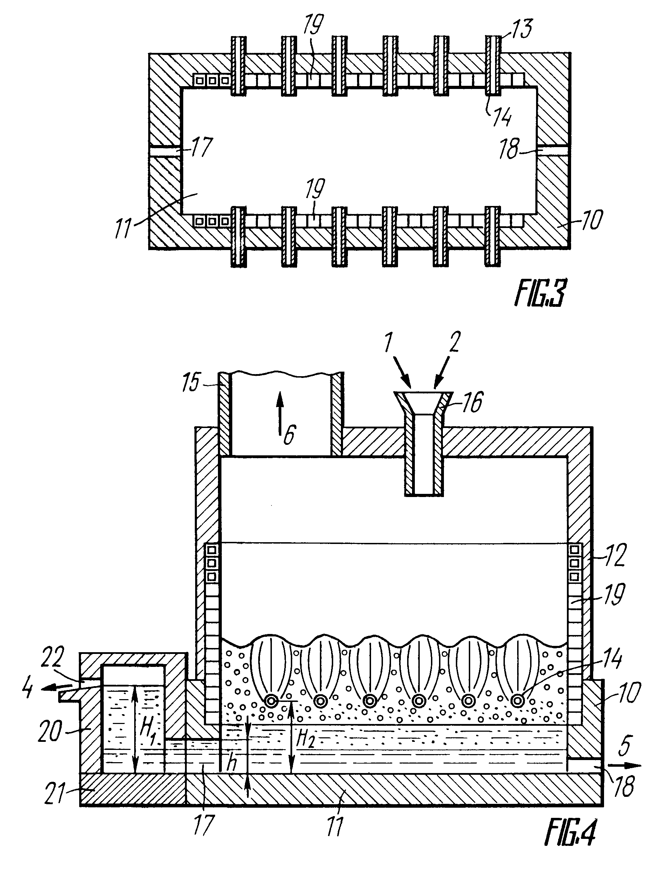

In einen Ofen werden gleichzeitig ein eisenhaltiges Gut 1 (Fig. 1) und ein fester kohlenstoffhaltiger Brennstoff 2 aufgegeben. Gleichzeitig mit dem Beschicken des Ofens wird ein sauerstoffhaltiges Gas 3 zugeführt, dessen Sauerstoff einen Teil des Brennstoffes 2 unter Freiwerden von Wärme oxydiert. Durch die freigewordene Wärme schmilzt das eisenhaltige Gut 1 herunter. Dabei werden die in ihm enthaltenen Metalloxyde mit Kohlenstoff des restlichen Teils des Brennstoffes 2 bis zur Bildung von flüssigen Schmelzprodukten, also einer Schlacke 4 (Fig. 2) und eines eisen- und kohlenstoffhaltigen Zwischenproduktes 5 reduziert. Dann werden die Schlacke 4, das Zwischenprodukt 5 und die sich während des Schmelzens bildenden Prozeßgase 6 abgeführt.

Gemäß der Erfindung wird vor dem gleichzeitigen Aufgeben des eisenhaltigen Gutes 1 und des festen kohlenstoffhaltigen Brennstoffes 2 ein Schlackenbad im Ofen gemacht. Das Schlackenbad wird durch Eingießen einer flüssigen bei der Fe-Metallproduktion anfallenden Schlacke gemacht. Es können auch Schlacken, die in Elektroöfen hergestellt worden sind, benutzt werden.

Bei einer anderen Durchführungsvariante der Erfindung wird vor dem Eingießen der Schlacke zur beschleunigten Einleitung des Schmelzvorganges und zur Verringerung des Verschleißes des Futters in den Ofen flüssiges Metall oberhalb dessen Abstichhöhe, jedoch unterhalb der Abstichhöhe der Schlacke eingegossen. Als flüssiges Metall wird Roheisen oder ein anderes eisen- und kohlenstoffhaltiges Schmelzgut benutzt.

Bei einer dritten Durchführungsvariante der Erfindung, welche beim Ausbleiben der flüssigen Schlacke verwendet wird, wird das Schlackenbad durch Beschicken des Ofens mit festen oxydischen Stoffen und deren Schmelzen gemacht. Als solche werden Schlacken aus der Fe-Metallproduktion (Hochofen-, Konverter-, Siemens-Martin-, Elektroöfenschlacken u.a.), mineralische Rohstoffe(Dolomit, Kalkstein, Sand, Spat u.a.), Metalloxyde ($CaO$, $MgO$, $SiO_2$, $Al_2O_3$ u.a.) eingesetzt. Die Stoffe werden sowohl aus einer der genannten Gruppen,als auch aus mehreren davon zugleich genommen.

Daraufhin wird ins gemachte Schlackenbad unterhalb dessen Spiegelhöhe ein sauerstoffhaltiges Gas 3 zuführt. Als sauerstoffhaltiges Gas 3 wird Prozeßsauerstoff (99,5 % $O_2$), technischer Sauerstoff (95 % $O_2$) oder mit Sauerstoff angereicherte Luft benutzt.

Dabei teilt der Strom 7 (Fig. 1) des sauerstoffhaltigen Gases 3 das Schlackenbad in zwei Zonen, und zwar in die untere Zone 8 des in einem ruhigen Zustand befindlichen Schlackenbades und in die obere Zone 9 des durch das zuzuführende Gas 3 verwirbelten Schmelzbades. Im nachfolgenden werden diese Zonen der Einfachheit halber als untere ruhige Schlackenbadzone und obere verwirbelte Schmelzbadzone 9 bezeichnet.

Dann wird in die obere verwirbelte Zone 9 der feste kohlenstoffhaltige Brennstoff 2 in einer Menge aufgegeben, die ausreicht, um in dieser Zone eine Volumenkonzentration des Brennstoffes in einem Bereich von 0,5 bis 50 %, bezogen auf das gesamte Schlackenbadvolumen in dieser Zone, zu erhalten. Die genannten Grenzwerte sind dadurch bedingt, daß einerseits die Oxydation des Brennstoffes 2 im Schlackenbad mit dem sauerstoffhaltigen Gas 3 unter Bildung von CO sichergestellt, und andererseits die Erhaltung der Fließfähigkeit des Schmelzgutes gewährleistet werden muß. Ein konkreter Konzentrationswert wird abhängig von der Menge an zuzuführendem sauerstoffhaltigen Gas, der Schlackeneigenschaften, der Art und Eigenschaften des festen kohlenstoffhaltigen Brennstoffes und sonstigen Prozeßkennwerten festgelegt.

Die Konzentration des festen kohlenstoffhaltigen Brennstoffes 2 in dem genannten Bereich wird im nachfolgenden dadurch aufrechterhalten, daß das eisenhaltige Gut 1 und der feste kohlenstoffhaltige Brennstoff 2 in die obere Zone gleichzeitig aufgegeben werden.

Als fester kohlenstoffhaltiger Brennstoff werden verschiedenartige kohlenstoffhaltige Werkstoffe benutzt. Vorzugsweise wird die Steinkohle eingesetzt. Es können Braunkohle, Torf , Holzkohle, Koksrückstände, Schungit, Schiefer, Anthrazit, Pyrolyseprodukte von kohlenstoffhaltigen organischen Stoffen sowie kohlenstoffhaltige Abfälle (Plaste, Gummis u.a.) verwendet werden.

Als ein zu verarbeitendes eisenhaltiges Gut werden Eisenerze, Eisenerzkonzentrate sowie vorher in verschiedenem Grade reduzierte Eisenerzrohstoffe (Eisenschwamm) verwendet. Das Verfahren bietet die Möglichkeit einer erfolgreichen Verarbeitung von getrockneten Schlämmen, Staub aus Gastrockenreinigungsanlagen metallurgischer Betriebe, Zunder, darunter einem geölten Zunder. Möglich ist auch das Umschmelzen von feinem Stahl- und Roheisenschrott, insbesondere von Span.

Die der Verwirbelung ausgesetzte Zone 9, die durch Einblasen des sauerstoffhaltigen Gases 3 ins Schlackenbad und durch anschließendes Aufgeben festen kohlenstoffhaltigen Brennstoffes 2 und des eisenhaltigen Gutes 1 gebildet wird, stellt ein zusammengesetztes heterogenes System dar, in dem das Schlackenbad, eine Gasphase, Teilchen des kohlenstoffhaltigen Brennstoffes, Teilchen des festen eisenhaltigen Gutes, Tropfen des geschmolzenen eisenhaltigen Gutes, Tropfen des Metalls, d.h. des Zwischenproduktes, das durch Reduktion von Metalloxyden aus dem Schlackenbad gewonnen worden ist, vorhanden sind. Das System wird durch die Energie des eingeblasenen sauerstoffhaltigen Gases 3 verwirbelt,das in einer Menge von 150 bis 1500 $nm^3/h$ je 1 $m^2$ waagrechte Querschnittfläche des Schlackenbades in der Zufurhöhe des sauerstoffhaltigen Gases 3 in Abhängigkeit von der Art des Brennstoffes, der Eigenschaften des Schmelzbades, des Sauerstoffgehaltes des sauerstoffhaltigen Gases, der vorgegebenen Leistung u.a. zugeführt wird.

Der Verbrauch an ins Schmelzbad zugeführtem sauerstoffhaltigen Gas 3 wird bei Anstieg der Reaktionsfähigkeit des festen kohlenstoffhaltigen Brennstoffes 2 vergrößert. Dadurch wird die Wechselwirkung des eisenhaltigen Gutes 1, des festen kohlenstoffhaltigen Brennstoffes 2 und des sauerstoffhaltigen Gases 3 unter Bildung der flüssigen Schlacke 4 und des flüssigen Metalls, d.h. des eisen- und kohlenstoffhaltigen Zwischenproduktes 5 für die Stahlerzeugung gewährleistet.

In der verwirbelten Zone 9 tritt das sauerstoffhaltige Gas 3 mit dem Kohlenstoff des festen kohlenstoffhaltigen Brennstoffes 2 in Wechselwirkung:

$$C + O_2 = CO_2$$
$$\frac{CO_2 + C = 2CO}{2C + O_2 = 2CO}$$

Dabei wird die Energie frei, die zur Herstellung des eisen- und kohlenstoffhaltigen Zwischenproduktes 5 aus dem eisenhaltigen Gut 1 notwendig ist.

Um die Betriebsverhältnisse für die Blasvorrichtungen zu verbessern, die Wechselwirkung des Sauerstoffes des sauerstoffhaltigen Gases 3 mit dem Brennstoff 2 zu beschleunigen, das Volumen von oxydativen Gaszonen im Schmelzbad zu vermindern und die Wärmeführung zu verbessern, wird in die verwirbelte Zone 9 unterhalb des Schlackenbadspiegels zusätzlich ein flüssiger, gasförmiger oder fester kohlenstoffhaltiger Brennstoff in Staubform zugeführt. Der gasförmige, flüssige oder feste kohlenstoffhaltige Brennstoff in Staubform wird am besten zusammen mit dem sauerstoffhaltigen Gas 3 zugeführt. Dadurch wird eine gute Vermischung und Verbrennung des Brennstoffes auf einer kurzen Strecke in der Zufuhrzone ins Schlackenbad erzielt.

Das eisenhaltige Gut 1 gelangt in kaltem oder vorgewärmtem Zustand in die vewirbelte Zone 9 und wird in das Schlackenbad aufgenommen, in dem es sich erwärmt und herunterschmilzt. Der metallische Bestand des eisenhaltigen Gutes 1 bildet Metalltropfen, die in die untere ruhige Zone 8 absinken und eine Metallschicht, d.h. eine Schicht aus dem eisen- und kohlenstoffhaltigen Zwischenprodukt 5 für die Stahlerzeugung bilden bzw. diese Schicht ständig auffüllen. Der oxydische Bestandteil des eisenhaltigen Gutes 1 löst sich beim Schmelzen in der Schlacke der Zone 9 auf und führt somit eine Steigerung in dem Gehalt der Schlacke an Eisenoxyden, Mangan, Silizium u.a. herbei.

Eisenoxyde sowie Oxyde anderer Metalle wie Silizium, Mangan, Nickel, Chrom u.a. werden aus dem Schlackenbad mit dem Kohlenstoff des festen kohlenstoffhaltigen Brennstoffes reduziert:

$$(Fe_2O_3) + 3CO = 2Fe + 3CO_2$$
$$\frac{3CO_2 + 3C = 6CO}{(Fe_2O_3) + 3C = 2Fe + 3CO}$$

Die sich infolge der Reduktion bildenden Metalltropfen koagulieren und sinken im Freifall in der ruhigen Zone 8 durch die Schicht aus der Schlacke 4 in die Schicht aus dem Metall 5 ab.

Die Schicht aus der Schlacke 4 in der ruhigen Zone 8 erneuert sich durch den Zulauf der Schlackenschmelze aus der Zone 9.

Somit besteht die ruhige Zone 8 aus zwei Schichten und zwar der oberen Schicht aus der Schlacke 4 und der unteren Schicht aus dem Metall 5.

Die flüssigen Schmelzprodukte, d.h. das eisen- und kohlenstoffhaltige Zwischenprodukt 5 und die Schlacke 4 werden aus den jeweiligen Schichten der ruhigen Zone 8 getrennt abgeführt. Dabei wird Metall 5 aus dem unteren Teil der Metallschicht abgeführt. Die Schlacke 4 kann auch aus dem unteren Teil der Schlackenschicht abgeführt werden. Um aber die Beständigkeit des Prozesses zu steigern, wird die Schlacke 4 aus dem mittleren oder dem oberen Teil der Schlackenschicht in der ruhigen Zone 8 abgeführt.

Bei der Wechselwirkung der Metalltropfen 5 mit der Schlacke 4 findet eine Raffination des Metalls zur Befreiung von Schwefel- und Phosphor-beimengungen statt. Die chemische Zusammen-setzung der Schlacke wird durch Aufgeben von Flußmittelzuschlägen in die Zone 9 gesteuert. Im Unterschied zur Hochofenverhüttung läßt sich die Zusammensetzung der Schlacke in einem breiteren Bereich variieren, so daß die Raffinationsfähigkeit der Schlacke erhöht und reineres Metall gewonnen werden kann.

Der Hauptteil des Schwefels, der vorwiegend mit dem festen kohlenstoffhaltigen Brennstoff eingebracht wird, kann mit den Abgasen 6 als gas-förmige Verbindungen $COS_2H_2S$ u.a. abgeführt werden. Für eine bessere Schwefelentfernung in der Gasphase und zur Herstellung eines schwefelarmen Metalls während des Schmelzens, wird das sauerstoffhaltige Gas 3 ins Schlackenbad kontinuierlich zugeführt, während das gleichzeitige Aufgeben des eisenhaltigen Gutes 1 und des festen kohlenstoffhaltigen Brennstoffes 2 periodisch erfolgt. Dadurch ergibt sich die Möglichkeit, das Schlackenbad in der Zone 9 periodisch zusätzlich zum Befreien von Schwefel zu raffinieren und somit sein schwefelaufnehmendes Vermögen zu verbessern.

Die sich in der Zone 9 bildenden Gase 6 entweichen aus dem Schlackenbad und werden aus dem Ofen abgeführt. Diese Gase 6 bestehen vorwiegend aus CO und $H_2$ und haben eine Temperatur, die der Schlackenbadtemperatur nahe ist. Sie können als gasförmiger Brennstoff oder als reduzierendes Prozeßgas beispielsweise zur direkten Eisenherstellung oder zum Einblasen in einen Hochofen benutzt werden.

Jedoch entwickelt sich bei der Gewinnung des reduzierenden Gases als Ergebnis des Schmelzens eine verhältnismäßig geringe Wärmemenge. Deshalb wird zur Gewährleistung einer hinreichend hohen Leistungsfähigkeit des Verfahrens zur Herstellung eines eisen- und kohlenstoffhaltigen Zwischenproduktes ein vorher reduzierter Eisenerzrohstoff oder ein feiner Metallschrott bevorzugt als eisenhaltiges Gut eingesetzt.

Bei einer zusätzlichen Zuführung von sauerstoffhaltigem Gas 3 oberhalb des Spiegels der Zone 9 wird eine wirksamere Ausnutzung der Energie des festen kohlenstoffhaltigen Brennstoffes sowie eines flüssigen, gasförmigen oder festen staubförmigen kohlenstoffhaltigen Brennstoffes unmittelbar während der Herstellung des eisen- und kohlenstoffhaltigen Zwischenproduktes erzielt. Dabei werden aus dem Schmelzbad entweichende CO und $H_2$ teilweise oder vollständig zu $CO_2$ und $H_2O$ nachgebrannt:

$$CO + 1/2\ O_2 = CO_2$$
$$H_2 + 1/2\ O_2 = H_2O$$

Die sich bei dem Ablauf dieser exothermischen Reaktionen entwickelnde Wärme erhitzt die Schlacke in der Zone 9 und wird zum Schmelzen des eisenhaltigen Gutes 1 und zur Reduktion von dessen Metalloxyden verbraucht. Ein zusätzlicher Wärmezufluß gestattet es die Produktivität des Prozesses zu steigern oder den Eisenerzrohstoff ohne vorangehende Reduktion unter Sicherstellung einer hohen Produktivität einzusetzen.

Beim vollständigen Nachbrennen der aus dem Schlackenbad entweichenden Gase werden während des Schmelzens nur unbrennbare Gase gebildet und abgeführt. Dadurch wird die Ausnutzung ihrer Energie wesentlich vereinfacht, weil eine wirksame Verwertung der fühlbaren Wärme von Gasen viel einfacher zu erzielen ist, als die Ausnutzung ihrer chemischen Wärme.

Als sauerstoffhaltiges Gas 3, das oberhalb des Spiegels der Zone 9 zugeführt wird, wird technischer Sauerstoff (95 % $O_2$) oder mit dem technischen Sauerstoff angereicherte Luft oder eigentliche Luft verwendet.

Das sauerstoffhaltige Gas 3 wird oberhalb des Spiegels der Zone 9, in einer Menge von (0,01 bis 5,0) $IO^3$ $nm^3$ (Normkubikmeter) je 1 t festen kohlenstoffhaltigen Brennstoffes in Abhängigkeit von der chemischen Zusammensetzung des festen kohlenstoffhaltigen Brennstoffes, des Sauerstoffgehalts im sauerstoffhaltigen Gas, des erforderlichen Nachbrenngrades etc. zugeführt.

Während des gleichzeitigen Aufgebens des festen kohlenstoffhaltigen Brennstoffes 2 und des eisenhaltigen Gutes 1 wird der Brennstoff in einer Menge von 0,2 bis 5,0 t/h je 1 $m^2$ waagrechte Querschnittfläche des Schlackenbades in der Zufuhrhöhe des sauerstoffhaltigen Gases 3 aufgegeben. Die Brennstoffmenge wird ausgehend von der Verbrauchsmenge des ins Schlackenbad zuzuführenden sauerstoffhaltigen Gases 3, dessen Sauerstoffgehalt, der chemischen Zusammensetzung des festen kohlenstoffhaltigen Brennstoffes und dem Nachbrenngrad festgelegt. Höhere Werte sind für Brennstoffe mit einem niedrigen Kohlenstoffgehalt sowie für das Schmelzen eines Eisenerzrohstoffes bei hohen Nachbrenngraden von aus dem Schmelzbad entweichenden Gasen typisch.

Das erfindungsgemäße Verfahren wird am besten in einem Ofen durchgeführt, der ein Schmelzgefäß 10 (Fig. 1 und 2) mit einem Herd 11, einen Schacht 12 der am Schmelzgefäß 10 oben abgestützt ist, Windformen 13 mit Düsen 14 (Fig. 2), durch die das sauerstoffhaltige Gas 3 ins Schmelzgefäß 10 zugeführt wird, sowie eine Einrichtung 15 zum Abzug der Prozeßgase 6, die im oberen Teil des Schachtes 12 angeordnet ist, enthält. Außerdem ist der Schacht 12 mit mindestens einer Beschickungsvorrichtung 16 zur Beschickung des Schmelzgefässes 10 mit eisenhaltigem Gut 1 und dem festen kohlenstoffhaltigen Brennstoff 2 versehen. Das Schmelzgefäß 10 hat einen in der Wand des Schmelzgefässes 10 in der Nähe des Herdes 11 gelegenen Schlackenabzugskanal 17 und einen ebenfalls in der Wand des Schmelzgefässes 10 unterhalb der Anordnungsebene der Windformen 13 verlaufenden Abzugskanal 18 für das eisen- und kohlenstoffhaltige metallische Zwischenprodukt 5, das im weiteren einfach als Metall bezeichnet wird.

Das Schmelzgefäß 10 und der Schacht 12 haben eine im wesentlichen rechteckige Form im horizontalen Querschnitt.

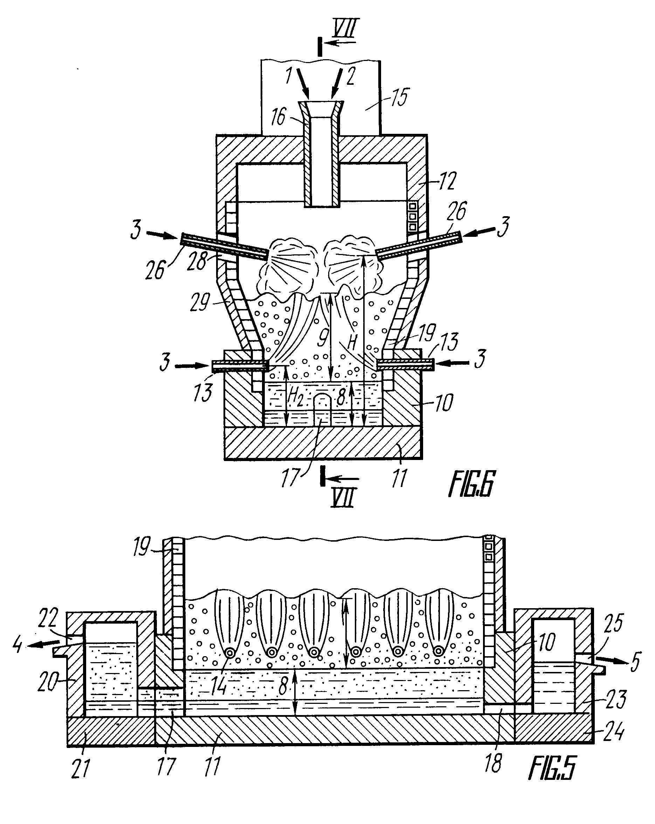

Der Oberteil des Schmelzgefässes 10 und mindestens der Unterteil des Schachtes 12 sind mit Kühlelementen 19 versehen. Zur Kühlung wird Wasser oder ein ähnlicher Wärmeträger eingesetzt. Die Windformen 13 (Fig. 3) mit den Düsen 14 zum Zuführen des sauerstoffhaltigen Gases ins Schmelzgefäß 10 sind in dessen abkühlbarem Oberteil auf den gegenüberliegenden Längsseiten des Gefässes 10 einander entgegen angeordnet.

Das Verhältnis der waagrechten Querschnittfläche des Schmelzgefässes 10 in der Anordnungsebene der Windformen 13 mit den Düsen 14 zur Gesamtfläche der Austrittsöffnungen der Düsen 14 beträgt dabei 300 bis 10000.

Im genannten Bereich kann das sauerstoffhaltige Gas ins Schlackenbad in einer bestimmten Verbrauchsmenge mit optimalen Geschwindigkeiten zugeführt werden, bei denen einerseits eine gute Durchmischung des Schlackenbades und andererseits eine lange Standzeit und eine hohe Zuverlässigkeit der Windformen 13 und der Düsen 14 gewährleistet wird.

Der Schlackenabzugskanal 17 ist in einer der Querwände des Schmelzgefässes 10 und der Abzugskanal 18 für das metallische Zwischenprodukt in der gegenüberliegenden Querwand des Schmelzgefässes 10 in der Nähe des Herdes 11 geführt.

Der Abstand h zwischen der unteren Grenze des Metallabzugskanals 18 und der oberen Grenze des Schlackenabzugskanals 17 beträgt das 0,3 bis 0,75 – fache des Abstandes H zwischen der unteren Grenze des Kanals 18 und der Anordnungsebene der Windformen 13 mit den Düsen 14 im Schmelzgefäß 10. Die Anordnungsebene der Windformen 13 wird von der Oberfläche des Herdes 11 bis zu den geometrischen Längsachsen der Windformen 13 gemessen.

Bei dem genannten Verhältnis wird die Schlacke von dem günstigsten Spiegelstand in der Höhe seiner Schicht abgezogen. Dadurch wird einerseits gewährleistet, daß sich über dem Metall stets eine Schicht der sich langsam erneuernden Schlacke befindet, was eine höhere Stabilität des Prozeßablaufs bei einer Erhöhung des Oxydationsgrades der Schlacke in der verwirbelten Zone 9 fördert, und andererseits wird erzielt, daß Verluste der Teilchen des festen kohlenstoffhaltigen Brennstoffes und der Metalltropfen zusammen mit der abzuziehenden Schlacke vermieden werden.

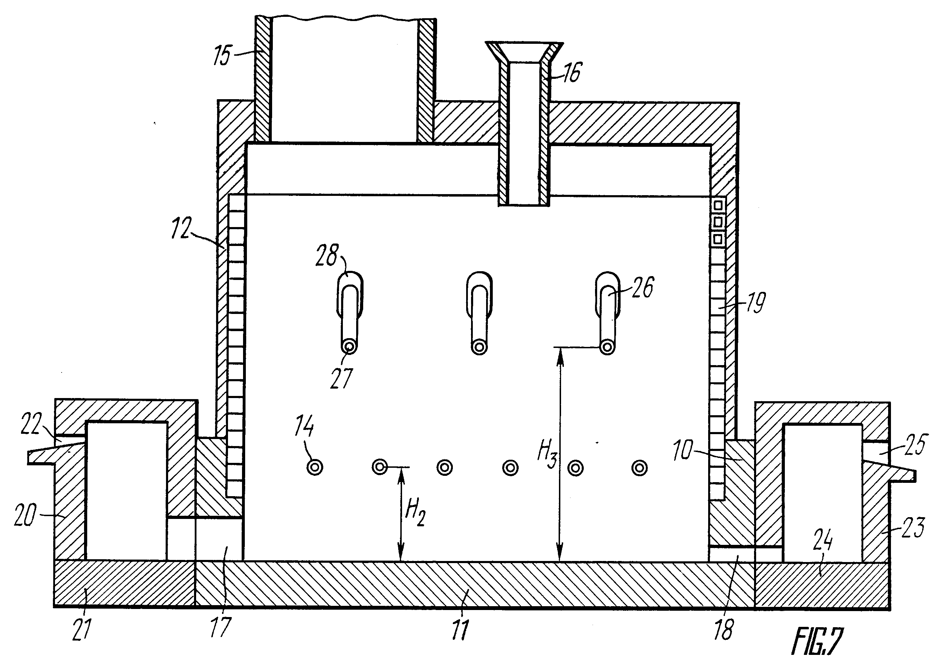

Der Ofen enthält auch einen Schlackenabsetzbehälter 20 (Fig. 4) mit einem Herd 21 in dem ein Loch 22 zum Abzug der Schlacke in einen Schlackensammler (in Fig. nicht gezeigt) vorgesehen ist und der mit dem Schmelzgefäß 10 über den Kanal 17 in Verbindung steht. Durch eine derartige Ofenkonstruktion und das Vorhandensein des Behälters 20 kann die Schlacke kontinuierlich je nach ihrer Bildung abgezogen werden. Durch die Schwelle des Abzugslochs 13 wird die Spiegelhöhe des Schlackenbades im Ofen vorgegeben. Durch eine Änderung der Schwellenhöhe wird die Spiegelhöhe des Schlackenbades im Ofen geändert.

Die durchschnittliche waagrechte Querschnittfläche des Behälters 20 beträgt dabei das 0,03 bis 0,3 – fache der durchschnittlichen waagrechten Querschnittfläche des Schmelzgefäßes 10.

Bei derartigen Größen der durchschnittlichen waagrechten Querschnittfläche des Behälters 20 relativ zu der durchschnittlichen waagrechten Querschnittfläche des Schmelzgefässes 10 werden Bedingungen für eine wirksame Trennung der kleinen Tropfen des Metalls 5 von der Schlacke 4 im Schmelzgefäß 10 voneinander geschaffen.

Der Herd 21 des Behälters 20 befindet sich in der gleichen Höhe wie der Herd 11 des Schmelzgefässes 10. Die untere Ebene des Kanals 17 liegt in der Ebene der Herde 11 und 21. Dadurch sammeln sich die im Behälter 20 von der Schlacke 4 abgeschiedenen Tropfen des Metalls 5 zu einer Schicht auf dem Herd 21 an und das Metall 5 wird über den Kanal 17 ins Schmelzgefäß 10 zurückgeführt.

Der vertikale Abstand $H_1$ zwischen der Ebene des Herdes 11 und der Unterkante des Abzugslochs 22 beträgt das 1,1 bis 2,5 – fache des Abstandes $H_2$ zwischen der Ebene des Herdes 11 und der Anordnungsebene der Windformen 13 mit den Düsen 14 im Schmelzgefäß 10. Die Abstände H und $H_2$ sind gleich, wenn der Metallabzugskanal 18 in der Nähe des Herdes 11 des Schmelzgefässes 10 liegt. Dabei wird ein optimales Höhenverhältnis der Zone 9 und der ruhigen Zone 8 des Schlackenbades und folglich eine optimale Höhe der Schicht der ruhigen Schlacke 4 gewährleistet, bei der eine wirksame Abscheidung der Metalltropfen und deren Reinigung von den Beimengungen ermöglicht wird, ohne daß die Wärmeübertragung auf die Metallschicht verschlechtert und die Wärmeverluste vergrößert werden.

Um einen zuverlässigen und kontinuierlichen Metallabstich zu ermöglichen und den Metallspiegel im Ofen zu stabilisieren, wird der Ofen auf der Stirnseite mit einem Außenbehälter 23 (Fig. 5) zum Absetzen des Zwischenproduktes – des Metalls 5 – versehen, der mit dem Schmelzgefäß 10 über den Metallabzugskanal 18 in Verbindung steht. Der Behälter 23 hat einen Herd 24 der in der gleichen Höhe mit dem Herd 11 des Schmelzgefässes 10 liegt. Im Behälter 23 ist ein Loch 25 zum Abstich des Metalls in eine Pfanne (in Fig. nicht gezeigt) vorhanden, durch dessen Schwellenhöhe die Höhe der Schicht des Metalls 5 in der ruhigen Zone 8 des Schlackenbades im Schmelzgefäß 10 bestimmt wird.

Um die Energie der sich aus dem Schlackenbad ausscheidenden Prozeßgase 6 auszunutzen und ihren Wärmewirkungsgrad und den Nutzungsgrad des festen kohlenstoffhaltigen Brennstoffs auf diese Weise zu erhöhen, wird der Ofen mit zusätzlichen Windformen 26 (Fig. 6) mit Düsen 27 zum Zuführen des sauerstoffhaltigen Gases ins Schmelzgefäß 10 oberhalb der Zone 9 ausgerüstet. Die Windformen 26 sind in einer oder in mehreren Reihen in der Höhe des Schachtes 12 in Kühlkästen 28 angeordnet, die in dessen Längswänden ausgebildet sind. Die Windformen 26 werden mit der Möglichkeit einer Verlagerung entlang ihrer Achsen in den Schacht 12 hinein bis zu einer Länge von 0,5 seiner Breite an der Anordnungsstelle der Windformen 26 sowie mit der Möglichkeit einer Änderung des Neigungswinkels der Windformachse zur Waagerechten von 0 bis 60° angeordnet. Zur Verlagerung der Windformen 26 in den Schacht 12 hinein sowie zur Änderung des Neigungswinkels der Windformen 26 relativ zur Waagerechten sind mechanische Mittel (in Fig. nicht gezeigt) vorgesehen.

Um einen hohen Nachbrennungsgrad und eine gute Wärmeübertragung von der Flamme auf das Schlackenbad zu sichern sowie eine Verbrennung des festen kohlenstoffhaltigen Brennstoffes durch das oberhalb der Zone 9 zugeführten sauerstoffhaltigen Gases und eine Überoxydation des Schmelzbades zu vermeiden, werden die Windformen 26 (Fig. 7) in einem Abstand $H_3$ vom Herd 11 angeordnet, der das 1,5 bis 6,0-fache des Abstandes $H_2$ zwischen dem Herd 11 und der Anordnungsebene der Hauptwindformen 13 mit den Düsen 14 beträgt.

Die Anordnungshöhe der zusätzlichen Windformen 26 wird durch die Lage der Unterkante der Austrittsöffnungen der Düsen 27 relativ zum Herd 11 bestimmt.

Um die Wärmeübertragung von der Nachbrennflamme auf das Schlackenbad durch die Strahlung zu verbessern und den Nutzungsgrad der Nachbrennwärme auf diese Weise zu erhöhen, wird in einem unter Prozeßgasnachbrennen gefahrenen Ofen mit den Windformen 26 (Fig. 5) zum Zuführen des sauerstoffhaltigen Gases oberhalb der Zone 9 der Unterteil 29 des Schachtes 12 im vertikalen Querschnitt in Form eines Trapezes ausgebildet, das mit der kleineren Grundfläche gegen das Schmelzgefäß 10 abgestützt ist. Durch die Trapezform wird das Schlackenbad ausgeweitet, die Projektionsfläche der Schlackenoberfläche der Zone 9 auf die horizontale Ebene und das Schachtvolumen über dem Schlackenbad in der Nachbrennzone vergrößert. Eine Trapezform kann ebenfalls der mittlere Schachtteil bzw. der ganze Schacht haben.

Um den Gesamtnutzungsgrad der Nachbrennwärme durch eine Optimierung der Wärmeübertragung von der Nachbrennflamme auf das Schlackenbad durch die Strahlung und durch die Konvektion zu vergrößern, soll die waagrechte Querschnittfläche des Schachtes 12 in der Anordnungsebene der zusätzlichen Windformen 26 zum Zuführen des sauerstoffhaltigen Gases oberhalb der verwirbelten Zone 9 des Schlackenbades das 1,05 bis 2,0-fache der waagrechten Querschnittfläche des Schmelzgefässes 10 in der Anordnungsebene der Hauptwindformen 13 mit den Düsen 14 zum Zuführen des sauerstofhaltigen Gases ins Schlackenbad betragen. Im genannten Bereich wird der konkrete Wert in Abhängigkeit von der ins Schlackenbad eingeblasenen Menge des sauerstoffhaltigen Gases, dem Nachbrennungsgrad, der Schmelzbadhöhe, den geometrischen Ofenmaßen gewählt.

Der Ofen für die Durchführung des Verfahrens zur Herstellung eines eisen- und kohlenstoffhaltigen Zwischenproduktes wird wie folgt betrieben.

Zum Schlackenbadmachen wird ins Schmelzgefäß 10 mit vorgewärmter Feuerfestauskleidung eine Flüssigschlacke, die als Nebenprodukt in einem Hochofen, oder einem Siemens-Martin-Ofen oder einem Elektrostahlofen anfällt, oder eine synthetische Flüssigschlacke eingegossen, die beispielsweise in einem Elektroschlackenschmelzofen erschmolzen ist. Die Schlacke wird bis zu einer Höhe eingefüllt, die die Anordnungsebene der Windformen 13 mit den Düsen 14 überschreitet. Beim Einsatz des Behälters 20 stimmt die maximale Füllhöhe mit der Schwellenhöhe des Lochs 22 zum Abzug der Schlacke aus dem Behälter 20 überein.

In einer anderen Variante wird der Ofen vor dem Einfüllen der Schlacke mit einem Flüssigmetall, vorzugsweise mit Roheisen, bis zu einer Höhe gefüllt, die die obere Grenze des Metallabzugskanal 18 überschreitet, jedoch die untere Grenze des Schlackenabzugskanals 17 unterschreitet.

In der dritten Variante des Schlackenbadmachens werden in den geheizten Ofen auf den Herd 11 feste Oxydstoffe, wie zerkleinerte Schlacken aus der Eisenmetallerzeugung, Mineralrohstoffe, Metalloxyde, aufgegeben und eingeschmolzen. Die festen Oxydstoffe werden geschmolzen, bis der Schlackenbadspiegel im Ofen die Anordnungsebene der Windformen 13 mit den Düsen 14 übersteigt.

Wenn eine volle Füllung des Ofens mit der Flüssigschlacke über die Höhe der Windformen 13 mit den Düsen 14 unmöglich ist, wird er teilweise gefüllt, wonach die festen Oxydstoffe ins Bad chargiert und eingeschmolzen werden.

Nach dem Schlackenbadmachen wird ins Schlackenbad unterhalb seines Spiegels über die Windformen 13 mit den Düsen 14 das sauerstoffhaltige Gas und wenn nötig ein flüssiger, ein gasförmiger oder ein fester staubförmiger kohlenstoffhaltiger Brennstoff unter einem den statischen Druck der Schlackenbadsäule über den Windformen 13 überschreitenden Druck und mit einem Stundenverbrauch von 150 bis 1500 nm$^3$/h pro 1 m$^2$ des horizontalen Badquerschnitts in der Anordnungsebene der Windformen 13 mit den Düsen 14 zugeführt. Auf diese Weise wird das Schlak-

kenbad in zwei Zonen, und zwar in die obere verwirbelte Zone 9 und die untere ruhige Zone 8 geteilt. Die obere Zone 9 des Schlackenbades oberhalb der Achsen der Windformen 13 mit den Düsen 14 und etwas unterhalb dieser wird dabei aktiv durchgemischt und verwandelt sich in ein Gas − Flüssigkeit − System.

Von oben wird ins Bad mittels der Beschik − kungsvorrichtung 16 der feste kohlenstoffhaltige Brennstoff beispielsweise stückige Steinkohle auf − gegeben. Die Größe der Kohlenstücke ist praktisch nicht beschränkt, weil die Kohle beim Gelangen ins Schlackenbad infolge des Wärmeschocks und der Ausscheidung von flüchtigen Komponenten in Teilchen mit einer maximalen Größe von 3 bis 4 mm zerstört wird. Andere Arten des festen koh − lenstoffhaltigen Brennstoffs werden in zerkleinerter Form eingesetzt.

Die in die obere Zone 9 aufgegebenen Teil − chen des festen kohlenstoffhaltigen Brennstoffs verteilen sich im Volumen des Schlackenbades. Die Volumenkonzentration des Brennstoffs wird auf 0,5 bis 50 % des Volumens der Schmelze in der oberen Zone 9 gebracht. Beim Gelangen in die Windformzonen wirken die Brennstoffteilchen mit dem sauerstoffhaltigen Gas unter Bildung des Kohlenstoffoxydes zusammen.

Durch die Wärmeentwicklung infolge der Brennstoffoxydation wird das Schlackenbad auf 1450 bis 1650° C erhitzt. Dann werden in die obere Zone 9 über die Beschickungsvorrichtung 16 der feste kohlenstoffhaltige Brennstoff 2 und das eisenhaltige Gut 1 gleichzeitig aufgegeben. Dabei wird die Volumenkonzentration des festen kohlen − stoffhaltigen Brennstoffs 2 in der Zone 9 in dem gleichen Bereich von 0,5 bis 50 % des Volumens der Schmelze in dieser Zone unterhalten.

Als eisenhaltiges Gut 1 für die Herstellung ei − nes eisen − und kohlenstoffhaltigen Produktes wird unter Voraussetzung einer hohen Durchsatzleistung eingesetzt: für einen Prozeß ohne Nachbrennen der Prozeßgase ein vorzugsweise metallisches Eisen enthaltendes Gut (vorreduziertes Eisenerzgut − Eisenschwamm, Stahl − bzw. Roheisenkleinschrott, Späne); für einen Prozeß mit Nachbrennen ein oxydiertes Gut (Eisenerz, Eisenerzkonzentrat, Stäube nach der Gasreinigung, Trockenschläm − me).

Für die Herstellung eines legierten eisen − und kohlenstoffhaltigen Produktes werden dem Ein − satzgut Rohstoffe zugesetzt, die Legierungsele − mente (Mangan −, Nickelerz, andere Erze bzw. deren Konzentrate) enthalten.

Bei Notwendigkeit werden dem Einsatzgut ebenfalls Flußmittel für die Herstellung der Schlacke mit einer vorgegebenen Zusammenset − zung zugesetzt. Als Zuschlag wird besonders Kalk verwendet. Statt Kalk kann ebenfalls Rohkalkstein eingesetzt werden.

Das eisenhaltige Gut, die Legierungs − und Flußmittelzuschläge sowie der kohlenstoffhaltige Brennstoff werden gemeinsam über die Beschik − kungsvorrichtung 16 in den Ofen aufgegeben.

Das Einsatzgut wird an die Beschickungsvor − richtung 16 beispielsweise mittels eines Förder − bandes (in Fig. nicht gezeigt) gemeinsam bzw. einzeln zugeführt.

Bei größeren Ofenmaßen können mehrere Beschickungsvorrichtungen 16 vorgesehen werden.

Beim Gelangen des Einsatzgutes in das Schlackenbad verteilt es sich schnell und gleich − mäßig im Volumen der oberen Zone 9, weil sich das Schlackenbad bewegt. Dadurch, daß das Schlackenbad mit einer hohen Intensität bewegt wird, die Energiequelle in diesem dezentralisiert und die Chargenkomponenten gleichmäßig verteilt sind, werden gute Bedingungen für eine schnelle Erwärmung und das Einschmelzen des eisenhalti − gen Guts und der Zuschläge geschaffen. Die zu − lässige Stückgröße des eisenhaltigen Guts und der Zuschläge hängt von deren Eigenschaften, den Eigenschaften der Schlacke, der Intensität des Einblasens des sauerstoffhaltigen Gases ins Schmelzbad und der Prozeßtemperatur ab und kann 20 bis 30 mm betragen.

Die metallische Komponente des eisenhaltigen Guts 1 bildet nach dessen Einschmelzen Metall − tropfen und die oxydische Komponente wird in der Schlacke aufgelöst. Die Oxyde des Eisens und einiger anderer Metalle (Si, Mn, Cr, Ni u.a.m.) werden durch den Kohlenstoff des festen kohlen − stoffhaltigen Brennstoffs 2 unter Bildung von Me − talltropfen reduziert.

Kleine Metalltropfen können ziemlich lange in der Zone 9 verweilen. In dieser Zone 9 stellt sich eine stationäre Konzentration dieser Tropfen ein, die von der Bewegungsgeschwindigkeit des Schlackenbades abhängig ist. Bei einer zuneh − menden Konzentration koagulieren die Tropfen, sie vergrößern sich und können sich in der oberen Zone 9 schon nicht mehr aufhalten. Sie sinken in die untere ruhige Zone 8 ab, fließen durch die Schicht der ruhigen Schlacke 4 durch und gelan − gen in die Schicht des Metalls 5 auf dem Herd 11.

Das Ausfällen von großen Metalltropfen, die beim Einschmelzen der metallischen Komponente des eisenhaltigen Gutes entstehen, erfolgt aus der Zone 9 schnell. Die Temperatur der Schmelze in der Zone 9 ist höher als die Temperatur in der unteren ruhigen Zone 8. Die Wärme wird in die untere ruhige Zone 8 vorzugsweise durch die Me − talltropfen eingebracht, die in der oberen Zone 9 erwärmt werden.

Infolge einer hohen Temperatur in der oberen verwirbelten Zone 9 und einer großen Grenzfläche der reagierenden Phasen "Gas − Festkohlenstoff −

Flüssigschlacke – Metall" läuft die Reduktion der Metalloxyde mit hohen Geschwindigkeiten ab. Im Ergebnis wird die Produktivität des Prozesses in der Regel nicht durch die Reduktionskinetik, sondern durch die Wärmezufuhr eingeschränkt. Die aggressive Schmelze in der oberen Zone 9 und etwas oberhalb dieser steht mit den Kühlelementen 19 in Berührung. Auf diesen Elementen 19 bildet sich eine Schicht des Schlackenansatzes mit einer Dicke von 5 bis 25 mm durch die große Wärmeverluste verhindert und dieselben gegen den abrasiven Verschleiß durch die Teilchen des festen kohlenstoffhaltigen Brennstoffs 2 und des eisenhaltigen Guts 1 geschützt werden, die in der Schlackenschmelze in der oberen Zone 9 enthalten sind.

Im unteren Teil des Schmelzgefässes 10, in den das Metall 5 und die Schlacke 4 aus der oberen Zone 9 gelangen, steht die Schmelze mit der Feuerfestauskleidung in Berührung. Jedoch ist die Schlacke in dieser Zone wesentlich weniger aggressiv, weil sie schon keine Festteilchen enthält, einen niedrigen Gehalt an Eisenoxyden und eine geringe Bewegungsgeschwindigkeit hat. Deswegen hat die Feuerfestauskleidung in dieser Zone eine genügend lange Standzeit.

Infolge einer geringen Bewegungsgeschwindigkeit der Schlacke in der ruhigen Zone 8 werden günstige Bedingungen für die Abscheidung der Metalltropfen aus dieser geschaffen. Dabei werden die Metalltropfen von den Beimengungen zusätzlich gereinigt.

Die Schlacke 4 wird aus ihrer Schicht in der ruhigen Zone 8 über den Kanal 17 in der Stirnwand des Schmelzgefässes 10 abgezogen. Durch die Änderung der Höhe vom Herd 11 bis zur oberen Grenze des Kanals 17 kann die Schlacke aus den verschiedenen Höhenebenen ihrer Schicht abgezogen werden. Beim Abzug der Schlacke aus dem unteren Teil ihrer Schicht wird eine etwas bessere Trennung der Metalltropfen von der Schlacke innerhalb des Schmelzgefässes 10 erzielt. Jedoch wird dabei die unmittelbar auf der Metallschicht aufliegende Schlackenschicht während des Schmelzvorgangs ständig erneuert, was zu einer zeitweiligen Steigerung des Oxydationsgrades der Schlacke in der unteren ruhigen Zone 8 sowie zum Sieden des Metalls führen kann. Im Ergebnis kann die Stabilität des Prozesses beeinträchtigt und die Standzeit der Feuerfestauskleidung des Schmelzgefässes 10 verkürzt werden.

Diese Erscheinungen werden durch den Abzug der Schlacke aus dem mittleren oder oberen Teil ihrer Schicht in der ruhigen Zone 8 verhindert. Dabei ist über der Flüssigmetallschicht eine sich sehr langsam erneuernde Schicht der Flüssigschlacke vorhanden, in der der Eisenoxydgehalt und der Kohlenstoffgehalt im Metall im Gleichgewicht stehen.

Durch den Schlackenabsetzbehälter 20 werden die Verluste an Metall 5 mit der Schlacke 4 verringert. Nach dem Passieren des Kanals 17 gelangt die Schlacke 4 in den ausgekleideten Behälter 20 und bewegt sich in diesem senkrecht aufwärts. Infolge eines relativ großen horizontalen Querschnitts des Behälters 20 nimmt die Geschwindigkeit des Schlackenstromes ab, wodurch ein unbehindertes Absetzen der Metalltropfen ermöglicht wird. Beim Absinken auf den Herd 21 des Behälters 20 gelangen die Tropfen in ein Metallbad, das mit dem Metallbad im Schmelzgefäß 10 kommuniziert.

Aus dem Oberteil des Behälters 20 wird die Schlacke über die Schwelle des Abzugslochs 22 in eine Abführrinne (in Fig. nicht gezeigt) drucklos abgelassen und zum Schlackensammler oder unmittelbar zur Verarbeitung abgeführt. Bei Notwendigkeit kann der Behälter 20 mit Brennern (in Fig. nicht gezeigt) beheizt werden.

Während des Prozesses wird die Schlacke gewonnen, die eine ähnliche Zusammensetzung wie Hochofenschlacke hat. Man kann ebenfalls Schlacken mit einer anderen Zusammensetzung gewinnen, wodurch die Möglichekiten ihrer Verwertung erweitert werden.

Das Metall 5 wird über den Kanal 18 am Herd 11 des Schmelzgefässes 10 abgezogen. Der Metallabzug kann durch ein periodisches Öffnen des Kanals 18 erfolgen. Jedoch ändert sich dabei der Schlackenbadspiegel im Schmelzgefäß 10, wodurch die Stabilität und die Parameter des Prozesses etwas verschlechtert werden. Ein kontinuierlicher Metallabzug kann durch die Unterhaltung eines vorgegebenen Querschnitts des Kanals 18 durchgeführt werden, bei dem der Abzug mit einer Geschwindigkeit erfolgt, die mit der Geschwindigkeit des Metalleintritts in die untere ruhige Zone 8 übereinstimmt. Jedoch ist ein derartiges Metallabzugssystem nicht ganz zuverlässig.

Ein zuverlässiger Metallabzug und ein stabiler Schlackenbadspiegel im Schmelzgefäß 10 werden mit Hilfe des Metallabsetzbehälters 23 gewährleistet. Das Metall 5 tritt über den Kanal 18 in den unteren Teil des Behälters 23 ein, steigt aufwärts, erreicht die Schwelle des Metallabstichlochs 25 und wird in eine Rinne (in Fig. nicht gezeigt) drucklos abgegossen, über die es zu einer Pfanne, einem Mischer oder unmittelbar zu einem Aggregat zur Weiterverarbeitung abgeführt wird.

Das gewonnene Metall wird als ein Zwischenprodukt für die Stahlerzeugung in Sauerstoffkonvertern, Elektroöfen, Anlagen zur Raffination außerhalb des Ofens und anderen Aggregaten eingesetzt.

Bei den chemischen Reduktions- und Brennvorgängen, die in der oberen verwirbelten Zone 9 ablaufen, fallen Prozeßgase an. Diese Gase bestehen hauptsächlich aus CO und $H_2$ und haben einen kleinen Gehalt an $CO_2$ und $H_2O$. Die Gase enthalten ebenfalls Stickstoff, der vom festen koh‐lenstoffhaltigen Brennstoff und vom sauerstoffhal‐tigen Gas abgegeben wird. Die Prozeßgase 6 scheiden sich aus dem Schlackenbad aus und werden aus dem Oberteil des Schachtes 12 über das Mittel 15 zum Abzug der Prozeßgase abge‐führt.

Die Prozeßgase 6 werden als Brennstoff in Feuerungen eingesetzt. Infolge einer hohen Quali‐tät der Gase (Verhältnis des Gehalts der Reduktions‐ und der Oxydationskomponenten zueinander) können die Prozeßgase 6 ebenfalls als ein Reduktionsmittel für die Vorgänge der direkten Festphasenreduktion von Eisen oder in Hochöfen eingesetzt werden. Der Wasserstoffgehalt in den Prozeßgasen kann durch die Änderung der Feuchtigkeit des Einsatzgutes sowie durch die Wasserdampfzufuhr über dem Schlackenbadspie‐gel geregelt werden.

Um den Ofendurchsatz zu vergrößern und den Brennstoffverbrauch zu verringern sowie, wenn keine Notwendigkeit bzw. keine Möglichkeit be‐steht, die reduzierenden Prozeßgase in anderen Aggregaten einzusetzen, werden sie teilweise oder vollständig im Ofen ausgenutzt. Dazu wird in den Schacht 12 über die zusätzlichen Windformen 26 das sauerstoffhaltige Gas 3 eingeblasen. Das Kohlenstoffoxyd und der Wasserstoff, die sich aus dem Schlackenbad ausscheiden, reagieren mit dem Sauerstoff des sauerstoffhaltigen Gases 3 und bilden $CO_2$ und $H_2O$. Durch die Zufuhr einer un‐terschiedlichen Menge des sauerstoffhaltigen Ga‐ses 3 pro 1 t Brennstoff wird der Nachbrennungs‐grad der Prozeßgase geregelt. Das sauerstoffhalti‐ge Gas 3 wird möglichst nahe der Oberfläche der Schmelze in der oberen Zone 9 zugeführt und durch die Änderung der Stellung der zusätzlichen Windformen 26 gleichmäßig darüber verteilt. Im Ergebnis wird über dem Schlackenbadspiegel eine Nachbrennflamme gebildet. Dadurch, daß die Schlackenspritzer und Festteilchen in die Flamme gelangen, besitzt sie einen hohen Schwärzegrad und folglich ein hohes Strahlungsvermögen.

Die Schlackenspritzer werden beim Durchflie‐gen durch die Flamme erwärmt und bringen beim Zurückfallen ins Bad die Wärme mit sich. Dabei wird ein hoher Übertragungsgrad bei der Übertra‐gung der Nachbrennwärme auf das Schmelzbad erreicht. Der Nutzungsgrad der Nachbrennwärme wird vergrößert, indem das Verhältnis der Waage‐rechtschnittflächen des Schachtes in der Nach‐brennzone und des Schmelzgefässes 10 in der Zufuhrhöhe des sauerstoffhaltigen Gases 3 ins Schlackenbad in einem Bereich von 1,05 bis 2,0 sowie der Abstand des Herdes 11 und der Düsen 27 der zusätzlichen Windformen 26 voneinander in einem Bereich von 1,5 bis 6,0 des Abstandes des Herdes 11 und der Ebene der Düsen 14 der Windformen 13 voneinander und in Abhängigkeit von anderen Parametern optimiert wird.

Bei einem vollständigen Nachbrennen im Ofen enthalten die Abgase 6 praktisch keine brennbaren Bestandteile. Bei ihrem Einsatz wird nur die phy‐sikalische Wärme ausgenutzt.

Der Staubgehalt in den Abgasen 6 ist gering, weil die Beschickung nicht konzentriert erfolgt und das Einsatzgut durch die verwirbelte Schlacke gut assimiliert wird.

Nachstehend sind Beispiele für die praktische Realisierung des erfindungsgemäßen Verfahrens zur Herstellung eines eisen‐ und kohlenstoffhalti‐gen Zwischenproduktes für die Stahlerzeugung im Ofen für seine Durchführung angeführt.

Beispiel 1

Im Ofen für die Herstellung eines flüssigen eisen‐ und kohlenstoffhaltigen Zwischenproduktes für die Stahlerzeugung wird ein Schlackenbad durch Eingießen in das Schmelzgefäß 10 einer flüssigen Hochofenschlacke mit einer Temperatur von 1350°C und folgender prozentualer Zusam‐mensetzung gebildet: $SiO_2$ ‐ 35,9 %; MnO ‐ 0,5 %; S ‐ 1,4 %; $Fe_{allgemein}$ ‐ 0,5 %; CaO ‐ 39,9 %; MgO ‐ 8,7 %; $Al_2O_3$ ‐ 9,8 %, Rest ‐ sonstige Oxyde.

Ins Schlackenbad wird unterhalb seines Spie‐gels durch die Windformen 13 mit den Düsen 14 das sauerstoffhaltige Gas 3 ($O_2$ = 99,5 %) mit einer Intensität von 1500 $nm^3/h$ je 1 $m^2$ Waage‐rechtschnittfläche des Schmelzbades zugeführt.

Das Verhältnis der waagerechten Querschnitt‐fläche des Schmelzgefässes 10 in der Anord‐nungsebene der Windformen 13 und der Gesamt‐querschnittsfläche der Düsen 14 dieser Windfor‐men zueinander beträgt 300.

Das Zuführen des sauerstoffhaltigen Gases unterhalb des Schlackenbadspiegels führt zur Bil‐dung einer oberen verwirbelten Zone 9 und einer unteren ruhigen Zone 8 im Schlackenbad.

In der Zone 9 wird durch die Beschickungs‐vorrichtung 16 Steinkohle mit einem Feuchtegehalt von 5 % in einer Menge aufgegeben, die ausreicht, um eine Volumenkonzentration der Kohle im Schlackenbad in der oberen Zone 9 von 20 % zu erzielen, wonach in diese Zone 9 zusammen mit der Kohle durch die Beschickungsvorrichtung 16 ein Eisenerzkonzentrat in einer Menge von 55 t/h aufgegeben wird, das folgende prozentuale Zu‐sammensetzung hat: Eisen allgemein ‐ 63,5 %, taubes Gestein ‐ 10,0 %. Dabei wird zusammen mit dem Eisenerzkonzentrat ein Zuschlagmaterial ‐ Kalk ‐ in einer Verbrauchsmenge von 6 t/h aufgegeben. Das Eisenerzkonzentrat und die Kohle werden an die Beschickungsvorrichtung 16 mit einem Förderband zugeführt.

Das Eisenerzkonzentrat gelangt zusammen mit der Kohle und dem Zuschlagmaterial in die verwirbelte Zone 9, wird erhitzt, heruntergeschmolzen und durch Zusammenwirken mit der Kohle reduziert. Als Wärmequelle für die Aufrechterhaltung des Schlackenbades im erhitzten Zustand, für das Erhitzen, für das Schmelzen und für die Reduktion des Rohstoffes wird die Verbrennung eines Teils der Kohle durch ihr Zusammenwirken mit dem Sauerstoff des durch die Windformen 13 mit den Düsen 14 zugeführten sauerstoffhaltigen Gases ausgenutzt.

Die Metalltropfen vergrößern sich und fallen aus dem Schlackenbad der verwirbelten Zone 9 heraus, passieren die Schlackenschicht in der unteren ruhigen Zone 8 und bilden eine ruhige Schicht des Metallbades aus.

Die sich beim Schmelzen in einer Menge von 123000 nm$^3$/h anfallenden Prozeßgase werden aus den Ofen über das Gasabzugsmittel 15 abgeführt. Die Zusammensetzung der Prozeßgase ist die folgende: CO − 75,0 Vol%; H$_2$ − 20,0 Vol%; CO$_2$ − 2,0 Vol%; N$_2$ − 1,0 Vol%.

Die sich beim Schmelzen bildende Schlacke wird aus dem Ofen über den Kanal 17 abgestochen. Die Zusammensetzung der abgestochenen Schlacke ist die folgende: SiO$_2$ − 38,7 %, MnO − 1,4 %, Fe$_{allgemein}$ − 4,0 %, CaO − 38,4 %, MgO − 8,9 %, Al$_2$O$_3$ − 10,6 %. Die Temperatur der Schlacke beträgt 1500˚ C.

Der Abstand des Herdes des Schmelzgefässes 10 von der oberen Grenze des Schlackenabzugskanals 17 beträgt das 0,3−fache des Abstandes zwischen der unteren Grenze des Metallabzugskanals 18 und der Anordnungsebene der Windformen 13, wodurch der Abzug der Schlacke von der Standhöhe im unteren Teil der Schlackenschicht in der unteren ruhigen Zone 8 gesichert wird.

Das sich beim Schmelzen bildende Metall wird aus dem Ofen über den in der Nähe des Herdes 11 des Schmelzgefässes 10 gelegenen Kanal 18 abgestochen. Die Zusammensetzung des abgestochenen Metalls ist die folgende: C − 4,5 %, S − 0,030 %, P − 0,11 %, Si − 0,15 %, Mn − 0,16 %. Die Abstichtemperatur des Metalls ist 1500˚ C. Die Ofenleistung beträgt 35,4 t/h, der Kohleverbrauch liegt bei 65 t/h, der Eisenausbringgrad liegt bei 96,85 %, der Staubaustrag bei 1,2 %.

Beispiel 2

Das Schmelzen wird ähnlich wie im Beispiel 1 durchgeführt.

Das Verhältnis der waagrechten Querschnittfläche des Schmelzgefässes 10 in der Anordnungsebene der Windformen 13 zu der Gesamtquerschnittsfläche der Düsen 14 dieser Windformen beträgt 10000.

Die Zuführung des sauerstoffhaltigen Gases 3 (O$_2$ = 99,5 %) erfolgt mit einer Intensität von 150 nm$^3$/h je 1 m$^2$ waagrechte Querschnittfläche des Schmelzbades.

In den Ofen wird der Eisenschwamm in einer Menge von 10 t/h aufgegeben, der folgende chemische Zusammensetzung hat, in Masse%: Eisen$_{allgemein}$ − 85 %, metallisches Eisen − 60 %, taubes Gestein − 10,0 %. Der Verbrauch am Zuschlagmaterial (Kalk) beträgt 0,9 t/h. Die Volumenkonzentration der Kohle im Schmelzbad der verwirbelten Zone 9 liegt bei 0,5 %. Die Zusammensetzung des hergestellten Metalls in Masseprozenten ist folgende: C − 3,8 %, S − 0,030 %, P − 0,11 %, Si − 0,15 %, Mn − 0,16 %. Die Temperatur des Metalls beim Abstich ist 1500˚ C. Die Schlacke wird über den Kanal 17 in den Behälter 20 abgezogen, in dem eine zusätzliche Trennung der Metalltropfen stattfindet. Dann wird die Schlacke aus dem Behälter 20 durch das Abstichloch 22 ununterbrochen abgezogen. Die durchschnittliche waagrechte Querschnittfläche des Behälters 20 beträgt 0,03 der durchschnittlichen Querschnittfläche des Schmelzgefässes 10. Der Anfall der Prozeßgase ist 14500 nm$^3$/h. Die Ofen−leistung liegt bei 8,6 t/h, der Kohleverbrauch liegt bei 8 t/h, der Eisenausbringgrad liegt bei 97,7 %, der Staubaustrag bei 1,0 %.

Beispiel 3

Das Schmelzen wird ähnlich wie im Beispiel 2 durchgeführt.

Das Verhältnis der waagrechten Querschnittfläche des Schmelzgefässes 10 in der Anordnungsebene der Windformen 13 zu der Gesamtfläche der Austrittsöffnungen der Düsen 14 dieser Windformen beträgt 450.

Die durchschnittliche waagrechte Querschnittfläche des Schlackenabsetzbehälters 20 beträgt 0,3 der durchschnittlichen waagrechten Querschnittfläche des Schmelzgefässes 10. Der Abstand der unteren Grenze des Kanals 18 bzw. des Herdes 11 und der oberen Grenze des Kanals 17 voneinander beträgt das 0,75−fache des Abstandes zwischen der unteren Grenze des Metallabzugskanals 18 und der Anordnungsebene der Windformen 13.

Der vertikale Abstand zwischen dem Herd 11 des Schmelzgefässes 10 und der Unterkante des Schlackenabstichloches 22 beträgt das 1,2−fache des Abstandes zwischen dem Herd 11 des Schmelzgefässes 10 und der Anordnungsebene der Windformen 13. Die Zuführung des sauer−stoffhaltigen Gases 3 (O$_2$ = 50 %) erfolgt mit einer

Intensität von 1300 nm$^3$/h je 1 m$^2$ waagrechte Querschnittfläche des Schlackenbades. Der Eisenschwamneinsatz beträgt 40 t/h. Die Volumenkonzentration der Kohle im Schlackenbad der verwirbelten Zone 9 liegt bei 40 %. Die Zusammensetzung des hergestellten Metalls in Masseprozenten ist die folgende: C – 4,8 %, S – 0,030 %, P – 0,11 %,Si – 0,15 %, Mn – 0,16 %. Die Temperatur des Metalls ist 1500˚ C.

Die Ofenleistung, bezogen auf das flüssige Metall, beträgt 35,2 t/h, der Kohleverbrauch – 26 t/h, das Eisenmetallausbringen aus dem eisenhaltigen Gut – 98,5 %, der Staubaustrag – 0,8 %.

Beispiel 4

Das Schmelzen wird ähnlich wie im Beispiel 3 durchgeführt.

Alle 6 Stunden wird das gleichzeitige Aufgeben von Kohle und Eisenschwamm für 25 Minuten eingestellt. Der durchschnittliche Schwefelgehalt im hergestellten Metall sinkt auf 0,015 %.

Beispiel 5

Im Ofen wird ein Schlackenbad durch Eingießen des flüssigen Hochofenroheisens mit einem Kohlenstoffgehalt von 4,8 % und einer Temperatur von 1480˚ C oberhalb der Ebene des Metallabzugskanals 18, aber unterhalb der oberen Grenze des Schlackenabzugskanals 17 und nachfolgendes Eingießen der flüssigen Hochofenschlacke wie im Beispiel 1 oberhalb der Höhe der Düsen 14 der Windformen 13 gemacht. Über die Windformen 13 wird das sauerstoffhaltige Gas 3 ($O_2$ = 80 %) mit einer Intensität von 1000 nm$^3$/h•m$^2$ zugeführt und dadurch die verwirbelte Zone 9 gebildet. In die verwirbelte Zone 9 wird Anthrazit mit einer Stückgröße von 0 bis 15 mm und einem Feuchtegehalt von 5 % in einer Menge aufgegeben, die ausreicht, um im Schlackenbad eine Volumenkonzentration des Brennstoffes von 25 % zu erzielen, wonach in die verwirbelte Zone 9 zusammen mit dem Anthrazit ein Hematiteisenerz mit einer Stückgröße von 0 bis 10 mm in einer Menge von 80 t/h aufgegeben wird. Die Zusammensetzung des Erzes in Masseprozenten ist die folgende: Eisen$_{allgemein}$ – 51,0 %, taubes Gestein – 23,5 %. Die Zuführung des Anthrazites erfolgt dabei in einer Menge von 1,4 t/h je 1 m$^2$ waagrechte Querschnittfläche des Schlackenbades. Der Verbrauch am Kalk beträgt 11 t/h.

Oberhalb des Schlackenbadspiegels wird Luft in einer Verbrauchsmenge von 5000 nm$^3$ je 1 t Anthrazit über die im Schacht 12 angeordneten zusätzlichen Windformen 26 zugeführt. Der untere Teil 29 des Ofenschachtes 12 ist im Senkrechtquerschnitt in Form eines Trapezes ausgebildet, wobei das Verhältnis der waagrechten Querschnittfläche des Schachtes 12 in der Anordnungshöhe der zusätzlichen Windformen 26 zu der waagrechten Querschnittfläche des Schmelzgefässes 10 in der Anordnungshöhe der Windformen 13 ist gleich 2,0. Die zusätzlichen Windformen 26 sind im Schacht 12 in einer Höhe angeordnet, die dem 3–fachen des Abstandes zwischen dem Herd 11 und der Anordnungshöhe der Windformen 13 entspricht. Die aus der oberen verwirbelten Zone 9 des Schlackenbades austretenden Prozeßgase werden mit dem Sauerstoff des sauerstoffhaltigen Gases 3 nachgebrannt, das durch die zusätzlichen Windformen 26 zugeführt wird.

Die sich dabei entwickelnde Wärme wird durch Strahlung und Konvektion auf das Schlackenbad der verwirbelten Zone 9 übertragen.

Die sich nach dem Nachbrennen bildenden Gase werden aus dem Schacht 12 des Ofens durch das Gasabführungsmittel 15 abgeführt. Die Zusammensetzung der trockenen Gase ist die folgende: $CO_2$ – 32,0 Vol%, $N_2$ – Rest. Die sich beim Schmelzen bildende Schlacke 4 wird ähnlich wie im Beispiel 2 aus dem Schmelzgefäß 10 abgestochen. Die Zusammensetzung der abgestochenen Schlacke ist folgende: $SiO_2$ –39 %, MnO – 1,4 %, Fe$_{allgemein}$ – 2,5 %, CaO – 38,4 %, MgO – 8,9 %, $Al_2O_3$ – 9,8 %. Die Schlackentemperatur liegt bei 1550˚ C.

Der Abstich des Metalls 5 aus dem Schmelzgefäß 10 erfolgt kontinuierlich über den Kanal 18, den Behälter 23 und das Abstichloch 25.

Die Zusammensetzung des abgestochenen Metalls ist folgende: C – 4,5 %, S – 0,035 %, P – 0,11 %, Si – 0,08 %, Mn – 0,09 %. Die Temperatur des Metalls liegt bei 1550˚ C. Die Ofenleistung beträgt 40 t/h. Der Anthrazitverbrauch – 28 t/h.

Beispiel 6

Das vorläufige Schlackenbadmachen erfolgt durch Aufgeben einer festen zerkleinerten Hochofenschlacke und deren Herunterschmelzen. In den Ofen wird Eisenschwamm in einer Menge von 10 t/h folgender Zusammensetzung, in Masseprozenten, aufgegeben: Eisen$_{allgemein}$ – 98,0 %, metallisches Eisen – 97,0 %, taubes Gestein – 0,7 %. Der Koksgrießverbrauch beträgt 0,2 t/h je 1 m$^2$ waagrechte Querschnittfläche des Schlackenbades in der Zufuhrhöhe des sauerstoffhaltigen Gases 3. Der volumetrische Koksgrießgehalt im Schlackenbad in der verwirbelten Zone 9 beträgt 10 %. Das sauerstoffhaltige Gas ($O_2$ = 99,5 %) wird unterhalb des Schlackenbadspiegels mit einer Intensität von 200 nm$^3$•m$^2$ und oberhalb des Schlackenbadspiegels mit einer Intensität von 10 nm$^3$ je 1 t Koksgrieß zugeführt.

Die Ofenleistung, bezogen auf das flüssige Produkt, beträgt 9,7 t/h, der Koksgrießverbrauch − 4 t/h, der Eisenausbringgrad − 99,3 %, der Staubaustrag − 0,5 %.

Beispiel 7

Das Schmelzen wird ähnlich wie im Beispiel 5 durchgeführt. Der Erzverbrauch beträgt 80 t/h. Als fester kohlenstoffhaltiger Brennstoff werden Abfallprodukte (Produkte der Müllpyrolyse) mit einem Kohlenstoffgehalt von 40 % verwendet. Die Abfallprodukte werden mit einer Intensität von 5 t/h je 1 $m^2$ waagrechte Querschnittfläche des Schlackenbades in der Zufuhrhöhe des sauerstoffhaltigen Gases aufgegeben.

Die Ofenleistung bezogen auf das flüssige Produkt beträgt 40 t/h, der Verbrauch an Kohlenstoffabfallprodukten − 100 t/h, das Ausbringen von Eisen aus den Erz liegt bei 95 %, der Staubaustrag − bei 0,5 %.

Beispiel 8

Das Schmelzen wird ähnlich wie im Beispiel 5 durchgeführt. Zusammen mit dem sauerstoffhaltigen Gas wird unterhalb des Schlackenbadspiegels Erdgas mit einer Intensität von 250 $nm^3$/h je 1 $m^2$ Waagerechtschnittfläche des Schlackenbades zugeführt. Der Anthrazit wird in einer Menge von 1,15 t/h je 1 $m^2$ und das Erz und der Kalk werden jeweils in Mengen von 88 t/h und 11,5 t/h aufgegeben. Die Ofenleistung, bezogen auf das flüssige Produkt beträgt 44,2 t/h, der Verbrauch an Anthrazit − 23 t/h, der Ausbringgrad von Eisen ins Produkt liegt bei 98,5 %.

**Patentansprüche**

1. Verfahren zur Herstellung eines eisen− und kohlenstoffhaltigen Zwischenproduktes für die Stahlerzeugung, bei dem
   − ein eisenhaltiges Gut (1) und ein fester kohlenstoffhaltiger Brennstoff (2) gleichzeitig aufgegeben werden und ein sauerstoffhaltiges Gas (3) zugeführt wird,
   − das eisenhaltige Gut (1), der feste kohlenstoffhaltige Brennstoff (2) und das sauerstoffhaltige Gas (3) so zusammenwirken, daß der Sauerstoff des sauerstoffhaltigen Gases (3) einen Teil des Brennstoffs (2) unter Freiwerden von Wärme oxydiert, die zum Schmelzen des eisenhaltigen Guts (1) und zur Reduktion von im eisenhaltigen Gut (1) enthaltenen Metalloxyden mit Kohlenstoff des restlichen Teils des Brennstoffs (2) genutzt wird, wobei sich Schlacke (4), das eisen− und kohlenstoffhaltige Zwischenprodukt (5) und Prozeßgase (6) bilden, und
   − die Schlacke (4), das eisen− und kohlenstoffhaltige Zwischenprodukt (5) und die Prozeßgase (6) abgeführt werden,
   dadurch gekennzeichnet,
   − daß vor der gleichzeitigen Aufgabe von eisenhaltigem Gut (1) und festem kohlenstoffhaltigem Brennstoff (2) ein Schlackenbad gemacht und das sauerstoffhaltige Gas (3) unter Druck in das Schlackenbad unterhalb des Schlackenbadspiegels zugeführt wird, wodurch das Schlackenbad in eine aufgewirbelte obere (9) und eine ruhigere untere (8) Zone geteilt wird,
   − daß in die obere Zone (9) soviel fester kohlenstoffhaltiger Brennstoff (2) zugeführt wird, daß eine Volumenkonzentration des Brennstoffs (2) in der oberen Zone (9) von 0,5 bis 50% bezogen auf das Schlackenbad in der oberen Zone (9) erreicht wird, und
   − daß das eisenhaltige Gut (1) und der feste kohlenstoffhaltige Brennstoff (2) gleichzeitig so aufgegeben werden, daß die Volumenkonzentration des Brennstoffs (2) aufrechterhalten wird, wodurch das eisenhaltige Gut (1), der feste kohlenstoffhaltige Brennstoff (2) und das sauerstoffhaltige Gas (3) so zusammenwirken, daß sich in der oberen Zone (9) flüssige Schlacke (4) und ein flüssiges Metall in Form von Tropfen bilden, wobei die flüssige Schlacke (4) in die untere Zone (8) absinkt und sich dort als Schicht niederläßt und die Tropfen des flüssigen Metalls die Schicht der Schlacke (4) passieren und darunter eine Schicht aus dem eisen− und kohlenstoffhaltigen Zwischenprodukt (5) bilden, und
   − daß die Schlacke (4) und das eisen− und kohlenstoffhaltige Zwischenprodukt (5) aus den entsprechenden Schichten heraus getrennt abgeführt werden.

2. Verfahren nach Anspruch 1, dadurch gekennzeichnet, daß pro 1 $m^2$ waagrechter Querschnittsfläche des Schlackenbads in der Zuführhöhe des sauerstoffhaltigen Gases (3) 150 bis 1500 Normkubikmeter pro Stunde sauerstoffhaltigen Gases (3) zugeführt werden.

3. Verfahren nach Anspruch 2, dadurch gekennzeichnet, daß die Zuführmenge des sauerstoffhaltigen Gases (3) erhöht wird, wenn die Reaktionsfähigkeit des festen kohlenstoffhaltigen Brennstoffs (2) ansteigt.

4. Verfahren nach Anspruch 1, dadurch gekennzeichnet, daß das sauerstoffhaltige Gas (3) während der Verhüttung kontinuierlich zugeführt wird, während das eisenhaltige Gut (1) und der feste kohlenstoffhaltige Brennstoff (2) periodisch aufgegeben werden.

5. Verfahren nach Anspruch 1, dadurch gekennzeichnet, daß das Schlackenbad durch Eingießen von bei der Eisenmetallproduktion anfallender Schlacke gemacht wird.

6. Verfahren nach Anspruch 5, dadurch gekennzeichnet, daß das vor dem Eingießen der flüssigen Schlacke flüssiges Metall eingegossen wird.

7. Verfahren nach Anspruch 1, dadurch gekennzeichnet, daß das Schlackenbad durch Aufgabe und Schmelzen mindestens eines festen oxydischen Stoffes gemacht wird, der aus einer bei der Eisenmetallproduktion anfallenden Gruppe aus Schlacken, mineralischen Rohstoffen und Metalloxyden ausgewählt wird.

8. Verfahren nach Anspruch 1, dadurch gekennzeichnet, daß in die obere Zone (9) unterhalb des Schlackenbadspiegels zusätzlich gasförmiger, flüssiger oder staubförmiger fester kohlenstoffhaltiger Brennstoff aufgegeben wird.

9. Verfahren nach Anspruch 1, dadurch gekennzeichnet, daß die Abführung der Schlacke (4) aus der unteren Zone (8) auf Höhe des mittleren oder oberen Bereichs der Schicht erfolgt.

10. Verfahren nach Anspruch 1, dadurch gekennzeichnet, daß während der Verhüttung pro Tonne festen kohlenstoffhaltigen Brennstoffs zusätzlich $0,01 \times 10^3$ bis $5,0 \times 10^3$ Normkubikmeter sauerstoffhaltigen Gases oberhalb des Schlackenbadspiegels zugeführt werden.

11. Verfahren nach Anspruch 10, dadurch gekennzeichnet, daß während des gleichzeitigen Aufgebens pro 1 m$^2$ waagrechter Querschnittsfläche des Schlackenbads in der Zuführhöhe des sauerstoffhaltigen Gases 0,2 bis 5,0 t/h festen kohlenstoffhaltigen Brennstoffs (2) zugeführt werden.

12. Ofen zur Durchführung des Verfahrens nach Anspruch 1, mit
    – einem einen Herd (11) aufweisenden Schmelzgefäß (10),
    – einem am Schmelzgefäß (10) abgestützten Schacht (12), in dessen Oberteil eine Beschickungsvorrichtung (16) für eisenhaltiges Gut (1) und festen kohlenstoffhaltigen Brennstoff (2) angeordnet ist,
    – Hauptwindformen (13) mit Düsen (14) zum Zuführen eines sauerstoffhaltigen Gases (3) in das Schmelzgefäß (10),
    – einem in der Wand des Schmelzgefässes (10) in der Nähe des Herdes (11) angeordneten Schlackenabzugskasten (17),
    – einem in der Wand des Schmelzgefässes (10) unterhalb der Anordnungsebene der Hauptwindformen (13) verlaufenden Abzugskanal (18) für eisen – und kohlenstoffhaltiges Zwischenprodukt, und
    – einer im Oberteil des Schachtes (12) angeordneten Abzugseinrichtung (15) für Prozeßgase (16),
    – wobei das Schmelzgefäß (10) und der Schacht (12) im horizontalen Querschnitt eine im wesentlichen rechteckige Form haben,
    dadurch gekennzeichnet,
    – daß die Hauptwindformen (13) mit den Düsen (14) im oberen Bereich der Längswände und die Abzugskanäle (17, 18) im Bereich der Querwände des Schmelzgefässes (10) angeordnet sind,
    – daß das Verhältnis der waagrechten Querschnittsfläche des Schmelzgefässes (10) in der Anordnungsebene der Hauptwindformen (13) mit den Düsen (14) zur Gesamtfläche der Austrittsöffnungen der Düsen 300 bis 10000 beträgt, und
    – daß der Abstand (h) zwischen der unteren Grenze des Abzugskanals (18) für das Zwischenprodukt und der oberen Grenze des Schlackenabzugskanals (17) das 0,3 bis 0,75 – fache des Abstandes (H) zwischen der unteren Grenze des Abzugskanals (18) für das Zwischenprodukt und der Anordnungsebene der Hauptwindformen (13) mit den Düsen (14) beträgt.

13. Ofen nach Anspruch 12, dadurch gekennzeichnet, daß der Oberteil des Schmelzgefässes (10) und wenigstens der Unterteil des Schachtes (12) abkühlbar sind.

14. Ofen nach Anspruch 13, dadurch gekennzeichnet, daß die Hauptwindformen (13) mit den Düsen (14) im abkühlbaren Bereich des Schmelzgefässes (10) angeordnet sind.

15. Ofen nach Anspruch 12, gekennzeichnet durch einen Schlackenabsetzbehälter (20) mit Abzugsloch (22), der mit dem Schmelzgefäß über den Schlackenabzugskanal (17) in Verbindung steht, wobei die durchschnittliche waagrechte Querschnittsfläche des Schlackenabsetzbehälters (20) das 0,03 bis 0,3−fache der durchschnittlichen waagrechten Querschnittsfläche des Schmelzgefässes (10) beträgt.

16. Ofen nach Anspruch 15, dadurch gekennzeichnet, daß der vertikale Abstand ($H_1$) zwi−schen dem Herd (11) des Schmelzgefässes (10) und der Unterkante des Abzugslochs (22) des Schlackenabsetzbehälters (20) das 1,1 bis 2,5−fache des Abstandes ($H_2$) zwischen dem Herd (11) und der Anordnungsebene der Hauptwindformen (13) mit den Düsen (14) beträgt.

17. Ofen nach Anspruch 12, gekennzeichnet durch einen Absetzbehälter (23) für das Zwischenprodukt mit einem Abstichloch (25), der über den Abzugskanal (18) für das Zwischenprodukt mit dem Schmelzgefäß (10) in Verbindung steht und durch den während des Schmelzvorgangs die Höhe des kontinuierlich abgezogenen Zwischenprodukts im Schmelzgefäß (10) konstant gehalten wird.

18. Ofen nach Anspruch 12, gekennzeichnet durch zusätzliche Windformen (26) mit Düsen (27), die im Oberteil des Schachtes (12) in mindestens einer horizontalen Reihe angeordnet sind.

19. Ofen nach Anspruch 18, dadurch gekenn−zeichnet, daß der Abstand ($H_1$) zwischen dem Herd (11) und der Anordnungsebene einer beliebigen Reihe der zusätzlichen Windformen (26) das 1,5 bis 6,0−fache des Abstandes ($H_2$) zwischen dem Herd (11) und der Anordnungsebene der Hauptwindformen (13) beträgt.

20. Ofen nach Anspruch 18, dadurch gekenn−zeichnet, daß die waagrechte Querschnittsflä−che des Schachtes (12) in der Anordnungsebene einer beliebigen Reihe der zusätzlichen Windformen (26) das 1,05 bis 2,0−fache der waagrechten Querschnittsfläche des Schmelzgefässes (10) in der Anordnungsebene der Hauptwindformen (13) beträgt.

21. Ofen nach Anspruch 18, dadurch gekennzeichnet, daß wenigstens der Unterteil (29) des Schachtes (12) im vertikalen Querschnitt die Form eines Trapezes hat, das mit der kleineren Grundfläche gegen das Schmelzgefäß (10) abgestützt ist.

## Claims

1. Process for making an ferrous−carbonaceous intermediate product for steel production, in which
   − a ferrous material (1) and a carbonaceous solid fuel (2) are simultaneously charged and an oxygen−containing gas (3) is supplied,
   − the ferrous material (1), the solid carbonaceous fuel (2) and the oxygen−containing gas (3) so interact that the oxygen of the oxygen−containing gas (3) oxidises part of the fuel (2) with the release of heat which is utilised for melting the ferrous material (1) and for reducing the metal oxides contained in the ferrous material (1) using carbon from the remaining part of the fuel (2), slag (4) and the ferrous−carbonaceous intermediate product (5) and process gases (6) being formed,
   − the slag (4), the ferrous−carbonaceous intermediate product 5 and the process gases (6) are removed,

   characterised in that,
   − before the simultaneous charging of ferrous material (1) and solid carbonaceous fuel (2), a bath of slag is made and the oxygen−containing gas (3) is fed to the bath below the slag bath surface under pressure, the bath of slag being divided into a swirling upper zone (9) and an undisturbed lower zone (8),
   − enough solid carbonaceous fuel (2) is fed into the upper zone (9) for a volume concentration of the fuel (2) of 0.5 to 50% referred to the bath of slag to be achieved in the upper zone (9), and
   − the ferrous material (1) and solid carbonaceous fuel (2) are simultaneously charged in such a way that the volume concentration of the fuel (2) is maintained, as a result of which the ferrous material (1), the solid carbonaceous fuel (2) and the oxygen−containing gas (3) so interact that in the upper zone (9) there form molten slag (4) and a molten metal in the form of drops, with the molten slag (4) sinking into the lower zone (8) and settling there as a layer, and the drops of molten metal passing through the layer of slag (4) and forming underneath it a layer of the ferrous−carbonaceous intermediate product (5), and

- the slag (4) and the ferrous – carbonaceous intermediate product (5) are removed separately from the respective layers.

2. Process according to Claim 1, characterised in that 150 to 1500 standard cubic metres per hour of oxygen – containing gas (3) per square metre of horizontal cross – sectional area at the inlet level of the bath of slag is fed in.

3. Process according to Claim 2, characterised in that the quantity of oxygen – containing gas (3) fed in is increased if the reactivity of the solid carbonaceous fuel (2) increases.

4. Process according to Claim 1, characterised in that the oxygen – containing gas (3) is fed in continuously during smelting, while the ferrous material (1) and solid carbonaceous fuel (2) are charged periodically.

5. Process according to Claim 1, characterised in that the bath of slag is formed by pouring in slag arising from ferrous metal production.

6. Process according to Claim 5, characterised in that the metal is poured in molten before the molten slag is poured in.

7. Process according to Claim 1, characterised in that the bath of slag is formed by charging and melting at least one solid metal oxide selected from a group formed of slags, mineral raw materials and metal oxides arising from ferrous metal production.

8. Process according to Claim 1, characterised in that additional solid carbonaceous fuel in the form of a gas, liquid or dust is charged below the surface of the bath of slag into the upper zone (9).

9. Process according to Claim 1, characterised in that the removal of slag (4) from the lower zone (8) takes place from the level of the middle or upper region of the layer.

10. Process according to Claim 1, characterised in that during smelting an additional $0.01 \times 10^3$ to $5.0 \times 10^3$ standard cubic metres of oxygen – containing gas per tonne solid carbonaceous fuel is fed above the surface of the bath of slag.

11. Process according to Claim 10, characterised in that during the simultaneous charging operation, 0.2 to 5.0 t/h solid carbonaceous fuel (2) per 1 m² horizontal cross – sectional area of the bath of slag is fed in at the level at which the oxygen – containing gas is supplied.

12. Furnace for carrying out the process according to Claim 1, having
    - a crucible (10) having a hearth (11),
    - supported on the crucible (10), a shaft (12), in the upper part of which is arranged a charging device (16) for ferrous material (1) and solid carbonaceous fuel (2),
    - main blast tuyeres (13) with nozzles (14) for supplying an oxygen – containing gas (3) to the crucible (10),
    - a slag removal box (17) arranged in the wall of the crucible (10) near the hearth (11),
    - a channel (18) running in the wall of the crucible (10) below the level of the main blast tuyeres (13), for the removal of ferrous – carbonaceous intermediate product, and
    - a device (15) in the upper part of shaft (12) for the removal of process gases (16),
    - with the crucible (10) and shaft (12) being substantially rectangular in horizontal cross – section,
    characterised in that,
    - the main blast tuyeres (13) with nozzles (14) are arranged in the upper region of the longitudinal walls and the removal channels (17, 18) are arranged in the cross – walls of the crucible (10),
    - the ratio of the horizontal cross – sectional area of the crucible (10) at the level of the main blast tuyeres (13) with the nozzles (14) to the total surface area of the nozzle outlet openings is 300 to 10,000, and
    the distance (h) between the lower limit of the channel (18) for the removal of the intermediate product and the upper limit of the channel (17) for the removal of slag is 0.3 to 0.75 times the distance (H) between the lower limit of the channel (18) for the removal of the intermediate product and the level of the main blast tuyeres (13) with the nozzles (14).

13. Furnace according to Claim 12, characterised in that the upper part of the crucible (10) and at least the lower part of the shaft (12) can be cooled.

14. Furnace according to Claim 13, characterised in that the main blast tuyeres (13) with the nozzles (14) are arranged in the coolable region of the crucible (10).

15. Furnace according to Claim 12, characterised by a slag drainage tank (20) with draw-off hole (22), connected to the crucible via the channel (17) for the removal of slag, with the mean horizontal cross-sectional area of the slag drainage tank (20) being 0.03 to 0.3 times the mean horizontal cross-sectional area of the crucible (10).

16. Furnace according to Claim 15, characterised in that the vertical distance (H1) between the hearth (11) of the crucible (10) and the lower edge of the draw-off hole (22) of the slag drainage tank (20) is 1.1 to 2.5 times the distance (H2) between the hearth (11) and the level of the main blast tuyeres (13) with the nozzles (14).

17. Furnace according to Claim 12, characterised by a drainage tank (23) for the intermediate product with a tapping hole (25), which is connected to the crucible (10) via the channel (18) for the removal of the intermediate product, and by means of which the level of the continuously drawn-off intermediate product is kept constant in the crucible (10) during the smelting procedure.

18. Furnace according to Claim 12, characterised by additional blast tuyeres (26) with nozzles (27), which are arranged in at least one horizontal row in the upper part of the shaft (12).

19. Furnace according to Claim 18, characterise in that the distance (H$_3$) between the hearth (11) and the level of any row of the additional blast tuyeres (26) is 1.5 to 6.0 times the distance (H$_2$) between the hearth (11) and the level of the main blast tuyeres (13).

20. Furnace according to Claim 18, characterised in that the horizontal cross-sectional area of the shaft (12) at the level of any row of additional blast tuyeres (26) is 1.05 to 2.0 times the horizontal cross-sectional area of the crucible (10) at the level of the main blast tuyeres (13).

21. Furnace according to Claim 18, characterised in that at least the lower part (29) of the shaft (12) is trapezoidal in vertical cross-section, the trapezium being supported by its smaller end against the crucible (10).

## Revendications

1. Procédé pour la production d'un produit intermédiaire contenant du fer et du carbone pour la production de l'acier, dans lequel
un matériau (1) contenant du fer et un combustible solide contenant du carbone (2) sont simultanément introduits et un gaz contenant de l'oxygène (3) leur est ajouté,
le matériau (1) contenant du fer, le combustible solide contenant du carbone (2) et le gaz contenant de l'oxygène (3) coopèrent de manière que l'oxygène du gaz (3) contenant de l'oxygène oxyde une partie du combustible (2) avec libération de chaleur, qui est utilisée pour la fusion du matériau (1) contenant du fer et pour la réduction des oxydes métalliques contenus dans le matériau (1) contenant du fer avec le carbone du reste du combustible (2) et ainsi se forment des scories (4), le produit intermédiaire (5) contenant du fer et du carbone et des gaz de traitement (6) et
les scories (4), le produit intermédiaire (5) contenant du fer et du carbone et les gaz de traitement (6) sont évacués,
caractérisé en ce que
avant l'introduction simultanée du matériau (1) contenant du fer et du combustible solide contenant du carbone (2), est produit un bain de scories et le gaz contenant de l'oxygène (3) est introduit sous pression dans le bain de scories en dessous du niveau du bain de scories, ainsi le bain de scories se trouve divisé en une zone supérieure (9) qui tourbillonne et une zone inférieure (8) au repos,
en ce que dans la zone supérieure (9) on introduit suffisamment de combustible solide (2) contenant du carbone pour atteindre une concentration en volume du combustible (2) dans la zone supérieure (9) de 0,5 à 50% en se rapportant au bain de scories dans la zone supérieure (9) et
en ce que le matériau contenant du fer (1) et le combustible solide (2) contenant du carbone sont introduits en même temps de manière que la concentration en volume du combustible (2) soit maintenue,ce par quoi le matériau (1) contenant du fer, le combustible solide (2) contenant du carbone et le gaz contenant de l'oxygène (3) coopèrent de manière qu'il se forme,dans la zone supérieure (9), des scories fluides (4) et un métal fluide sous la forme de gouttes et les scories fluides (4) tombent dans la zone inférieure (8) et s'y déposent sous la forme d'une couche et les gouttes du métal fluide passent à travers la couche de scories (4) et forment en dessous une couche du produit intermédiaire (5) contenant le fer et le carbone et

en ce que les scories (4) et le produit intermédiaire (5) contenant le fer et le carbone sont enlevés des couches correspondantes en étant séparés.

2. Procédé selon la revendication 1, caractérisé en ce que, par mètre carré de surface en coupe horizontale du bain de scories à la hauteur d'arrivée du gaz (3) contenant de l'oxygène, on introduit 150 à 1.500 mètres cubes normaux par heure de gaz (3) contenant de l'oxygène.

3. Procédé selon la revendication 2, caractérisé en ce que la quantité de gaz (3) contenant de l'oxygène que l'on introduit est augmentée lorsque la capacité de réaction du combustible solide contenant du carbone (2) augmente.

4. Procédé selon la revendication 1, caractérisé en ce que le gaz (3) contenant l'oxygène est continuellement introduit pendant le traitement métallurgique tandis que le matériau (1) contenant du fer et le combustible solide (2) contenant du carbone sont introduits périodiquement.

5. Procédé selon la revendication 1, caractérisé en ce que le bain de scories est formé en versant les scories provenant de la production du métal ferreux.

6. Procédé selon la revendication 5, caractérisé en ce que le métal fluide est versé avant de verser les scories fluides.

7. Procédé selon la revendication 1, caractérisé en ce que le bain de scories est formé par introduction et fusion d'au moins une matière solide obtenue par voie d'oxydation, qui est choisie dans l'un des groupes se présentant dans la production des métaux ferreux formés des scories, matières premières minérales et oxydes métalliques.

8. Procédé selon la revendication 1, caractérisé en ce que, dans la zone supérieure (9) est introduit, en dessous du niveau du bain de scories, en supplément, un combustible gazeux, fluide ou solide en forme de poussière ,contenant du carbone.

9. Procédé selon la revendication 1, caractérisé en ce que l'évacuation des scories (4) de la zone inférieure (8) se produit à la hauteur du milieu ou de la zone supérieure de la couche.

10. Procédé selon la revendication 1, caractérisé en ce que, pendant le traitement métallurgique on introduit, par tonne du combustible solide contenant du carbone, en supplément, $0,01 \times 10^3$ à $5,0 \times 10^3$ mètres cubes normaux de gaz contenant de l oxygène au—dessus du niveau du bain de scories.

11. Procédé selon la revendication 10, caractérisé en ce que, pendant l'introduction simultanée, on introduit, par mètre carré de section transversale horizontale du bain de scories, à la hauteur d'alimentation du gaz contenant de l'oxygène, 0,2 à 5,0 t/h du combustible solide contenant du carbone (2).

12. Four pour la mise en oeuvre du procédé selon la revendication 1 avec

un réservoir de fusion (10) présentant une soie (11),

une cuve (12) s'appuyant sur le réservoir de fusion (10), à la partie supérieure de laquelle est agencé un dispositif (16) d'introduction d'un matériau (1) contenant du fer et d'un combustible solide (2) contenant du carbone,

des tuyères principales (13) avec des buses (14) pour l'introduction d'un gaz (3) contenant de l'oxygène dans le réservoir de fusion (10),

un caisson de retrait des scories (17) agencé dans la paroi du réservoir de fusion (10) à proximité de la sole (11),

un canal d'évacuation (18) passant dans la paroi du réservoir de fusion (10) en dessous du plan où sont agencées les tuyères principales (13) pour le produit intermédiaire contenant du fer et du carbone et un système d'évacuation (15) agencé au—dessus de la cuve (12) pour les gaz de traitement (16),

le réservoir de fusion (10) et la cuve (12) ayant en section horizontale une forme essentiellement rectangulaire,

caractérisé en ce que

les tuyères principales (13) sont agencées,avec les buses (14), dans la partie supérieure des parois longitudinales et les canaux d'évacuation (17,18) sont agencés dans la zone des parois transversales du réservoir de fusion (10),

en ce que le rapport de la section transversale horizontale du réservoir de fusion (10) dans le plan d'agencement des tuyères principales (13) avec les buses (14) et de la surface totale des ouvertures de sortie des buses est de 300 à 10.000 et en

ce que

la distance (h) entre la limite inférieure du canal d'évacuation (18) pour le produit intermédiaire et la limite supérieure du canal d'évacuation des scories (17) représente 0,3 à 0,75 fois la distance (H) entre la limite infé‐rieure du canal d'évacuation (18) du produit intermédiaire et le plan où sont agencées les tuyères principales (13) avec les buses (14).

13. Four selon la revendication 12, caractérisé en ce que la partie supérieure du réservoir de fusion (10) et au moins la partie inférieure de la cuve (12) peuvent être refroidies.

14. Four selon la revendication 13, caractérisé en ce que les tuyères principales (13) sont agen‐cées avec les buses (14) dans la zone du réservoir de fusion (10) qui peut être refroidie.

15. Four selon la revendication 12, caractérisé par un récipient (20) de dépôt des scories avec un trou d'évacuation (22) qui est en liaison avec le réservoir de fusion par le canal d'évacuation des scories (17) et la surface en section transversale horizontale moyenne du récipient de dépôt des scories (20) représente 0,03 à 0,3 fois la section transversale horizontale moyenne du réservoir de fusion (10).

16. Four selon la revendication 15, caractérisé en ce que la distance verticale ($H_1$) entre la sole (11) du réservoir de fusion (10) et le bord inférieur du trou d'évacuation (22) du récipient (20) de dépôt des scories représente 1,1 à 2,5 fois la distance ($H_2$) entre la sole (11) et le plan où sont agencées les tuyères principales (13) avec les buses (14).

17. Four selon la revendication 12, caractérisé par un récipient de dépôt (23) du produit inter‐médiaire avec un trou de coulée (25) qui est en liaison, par le canal d'évacuation (18), du produit intermédiaire avec le réservoir de fu‐sion (10) et grâce auquel, pendant le proces‐sus de fusion, le niveau du produit intermé‐diaire continuellement retiré est maintenu constant dans le réservoir de fusion (10).

18. Four selon la revendication 12, caractérisé par des tuyères supplémentaires (26) avec des buses (27) qui sont agencées à la partie su‐périeure de la cuve (12), au moins sur une rangée horizontale.

19. Four selon la revendication 18, caractérisé en ce que la distance ($H_1$) entre la sole (11) et le plan d'agencement d'une rangée choisie des tuyères supplémentaires (26) représente 1,5 à 6,0 fois la distance ($H_2$) entre la sole (11) et le plan d'agencement des tuyères principales (13).

20. Four selon la revendication 18, caractérisé en ce que la section transversale horizontale de la cuve (12) dans le plan où est agencée une rangée choisie de tuyères supplémentaires (26) représente 1,05 à 2,0 fois la section transversale horizontale du réservoir de fusion (10) dans le plan de l'agencement des tuyères principales (13).

21. Four selon la revendication 18, caractérisé en ce qu'au moins le dessous (29) de la cuve (12) a, en section verticale, la forme d'un trapèze qui est soutenu par sa plus petite base contre le réservoir de fusion (10).

FIG.1

FIG.2

FIG.3

FIG.4

FIG.6

FIG.5

FIG.7